# EUROPÄISCHE PATENTSCHRIFT

(11) **EP 3 354 602 B1**
(45) Veröffentlichungstag und Bekanntmachung des Hinweises auf die Patenterteilung: **22.05.2024**
(21) Anmeldenummer: 18159369.0
(22) Anmeldetag: 13.08.2014
(51) Int. Cl.: B65G 37/02, B65G 54/02, B65G 43/10

(54) **VORRICHTUNG UND VERFAHREN ZUM BEWEGEN VON TRANSPORTELEMENTEN IN EINER BEHÄLTERBEHANDLUNGSANLAGE**
DEVICE AND METHOD FOR MOVING CONVEYING ELEMENTS IN A CONTAINER TREATMENT PLANT
DISPOSITIF ET PROCÉDÉ DE DÉPLACEMENT D'ÉLÉMENTS TRANSPORTEURS DANS UNE INSTALLATION DE MANUTENTION DE RÉCIPIENTS

(30) Priorität: 13.09.2013 DE 102013218391
(43) Veröffentlichungstag der Anmeldung: 01.08.2018
(62) Teilanmeldung aus: 14752824.4
(73) Patentinhaber: KRONES Aktiengesellschaft, 93073 Neutraubling (DE)
(72) Erfinder: Wahl, Matthias, 93073 Neutraubling (DE); Hifinger, Toni, 93073 Neutraubling (DE); Senn, Konrad, 93073 Neutraubling (DE); Walter, Ralf, 93073 Neutraubling (DE)
(74) Vertreter: Grünecker Patent- und Rechtsanwälte PartG mbB

(56) Entgegenhaltungen:
- WO-A1-99/54244
- DE-A1- 4 133 114
- DE-A1-102010 018 153
- DE-A1-102011 055 780
- JP-A- H0 551 087
- JP-A- H04 173 613
- JP-A- 2010 132 405
- US-A- 4 738 387
- US-A- 5 087 423

## Beschreibung

### Gebiet der Erfindung

Die vorliegende Erfindung betrifft eine Vorrichtung und ein Verfahren zum gesteuerten Bewegen von einzeln steuerbaren Transportelementen zum Transport von Behältern, insbesondere von Flaschen oder Dosen, in einer Anlage zur Behandlung der Behälter.

### Stand der Technik

Bei Behälterbehandlungsanlagen werden Behälter, wie z. B. Flaschen, Dosen, usw., in einem oder mehreren aufeinanderfolgenden Prozessschritten behandelt. Dabei werden im Allgemeinen die Prozessschritte bzw. Arbeitsschritte in separaten Behandlungseinheiten durchgeführt, die beispielsweise als Module eines gemeinsamen Anlagenkonzepts zusammengestellt werden können. Um Kosten für die Anschaffung und den Betrieb der Anlage zu reduzieren, werden üblicherweise Schnittstellen zur Steuerung der Anlage, zur Medienversogung oder dergleichen vereinheitlicht, um die Kombination von Behandlungseinheiten unterschiedlicher Typen und/oder Produktionskapazitäten zu vereinfachen. Eine Behälterbehandlungsanlage für Kunststoffflaschen, z. B. aus Polyethylenterephthalat (PET), Polypropylen (PEP), usw., kann beispielsweise eine Heizvorrichtung zum Erwärmen der Vorformlinge, eine Streckblasvorrichtung zum Expandieren und Strecken der Vorformlinge zu Kunststoffflaschen, eine Reinigungsvorrichtung, eine Etikettiervorrichtung, eine Füllvorrichtung, eine Sortiervorrichtung, eine Verpackungsvorrichtung, eine Sterilisationsvorrichtung, eine Inspektionsvorrichtung, eine Temperiervorrichtung, eine Kühlvorrichtung, eine Beschichtungsvorrichtung, eine Puffervorrichtung, usw. als separate, modular ausgeführte Behandlungseinheiten umfassen. Die einzelnen Behandlungseinheiten, welche aufeinanderfolgende Prozessschritte durchführen, sind dabei im Stand der Technik im Allgemeinen in Reihe hintereinander geschaltet, wobei eine oder mehrere Transportvorrichtungen den Transport der Behälter von den Behandlungseinheiten zu den jeweiligen nachgeschalteten Behandlungseinheiten übernehmen.

Die Durchführung aufeinander folgender Prozessschritte durch die separaten Behandlungseinheiten der Anlage sowie der Transport zwischen den Behandlungseinheiten entspricht somit dem bekannten Prinzip der Fließbandverarbeitung, bei der ein kontinuierlicher Fluss von zu behandelnden Behältern durch die in Serie angeordneten Behandlungseinheiten mittels geeigneter Steuerungsprozesse bezüglich der Prozessdauer der einzelnen Prozessschritte und/oder der Menge der pro Zeiteinheit von einer Behandlungseinheit zur nächsten Behandlungseinheit transportierten Behälter erreicht wird. Bei den im Stand der Technik bekannten Anlagen wird der Transport der Behälter zwischen den Behandlungseinheiten vielfach mittels einer Vielzahl separater Transportelemente in Form von Trägern realisiert, welche die Behälter oder Vorformlinge mittels geeigneter Haltevorrichtungen, z. B. speziell geformter Greifeinheiten, bei einer Aufnahmestelle aufnehmen, durch die Reihe der aufeinander folgenden Behandlungseinheiten transportieren und schließlich an einer Abgabestelle abgeben. Die Behälter werden dabei im Allgemeinen durch geeignet ausgestaltete Zuförderer an den Aufnahmestellen an die Vielzahl der Transportelemente übergeben und entsprechend durch geeignet ausgestaltete Abförderer an den Abgabestellen von der Vielzahl der Transportelemente übernommen. Sowohl die Zuförderer und Abförderer als auch die einzelnen Behälterbehandlungseinheiten fördern bzw. behandeln die Behälter mit einer jeweils in Abhängigkeit von dem zu behandelnden Behälter, dem Prozessschritt und/oder der durchführenden Behandlungseinheit vom Betreiberpersonal oder einer Steuereinrichtung vorgegebenen Rate an Behältern pro Zeiteinheit. Anders ausgedrückt müssen für eine lückenlose und effektive Produktion Behälter in vorgegebenen, konstanten zeitlichen Abständen bzw. bei konstanter, vorgegebener Geschwindigkeit der Transportelemente mit vorgegebenen, konstanten räumlichen Abständen, der sogenannten Teilung eines (Produkt-) Stroms bei der jeweiligen Behandlungseinheit bzw. Fördereinrichtung anlangen. Obwohl die Verarbeitungsrate der einzelnen Behandlungseinheiten und/oder die Förderraten der Fördereinrichtungen typischerweise innerhalb gewisser Grenzen steuer- bzw. regelbar sind, führen Abweichungen von der vorgegebenen Rate, d. h. von dem vorgegebenen zeitlichen Abstand bzw. dem vorgegebenen räumlichen Abstand zweier aufeinander folgender Transportelemente, im Allgemeinen zu Produktionsverzögerungen, da die Verarbeitungsraten der einzelnen Behandlungseinheiten nur mit zeitlicher Verzögerung angepasst werden können.

insbesondere stellen Lücken im ansonsten regelmäßigen Produktionsstrom an Behältern die Steuerung bzw. Regelung von Behandlungseinheiten vor große Schwierigkeiten, da diese bei Auftreten einer Lücke vorübergehend verzögert arbeiten müssen, um anschließend wieder auf Normalgeschwindigkeit gefahren zu werden. Dabei geht im Allgemeinen wertvolle Produktionszeit verloren. Das Entstehen von Lücken in Produktionsstrom von Behälterbehandlungsanlagen ist jedoch ein alltägliches Phänomen, wobei die Lücken z. B. durch Erkennen des Behandlungszustandes von Behältern als fehlerhaft und Ausschleusen der Behälter entstehen.

Es liegt somit der vorliegenden Erfindung die Aufgabe zugrunde, ein verbessertes Verfahren zur individuellen Steuerung der Transportelemente einer Transportvorrichtung in einer Behälterbehandlungsanlage zur Verfügung zu stellen, dass die oben genannten Nachteile überwindet und insbesondere eine effiziente Lückenverarbeitung der Behälterbehandlungsanlage ermöglicht.

Bei Behälterbehandlungsanlagen mit mehreren, in Serie angeordneten Behälterbehandlungseinheiten zur Durchführung von aufeinander folgenden Prozessschritten kann bereits der Ausfall einer einzigen Behandlungseinheit zum Stillstand der gesamten Prozesslinie und damit zu erheblichem Produktionsausfall führen. Um den Produktionsausfall zu reduzieren werden im Stand der Technik häufig Zwischenpuffer für Transportelemente und ihre mitgeführten Behälter vorgesehen, welche teilweise eine erhebliche Vergrößerung der Baugröße der Behandlungsanlage erforderlich machen. Andererseits ist die Abfolge der Prozessschritte in der Prozesslinie oft nicht zwingend einzuhalten. Beispielsweise kann eine Steuermarke sowohl vor als auch nach einem Etikettierungsschritt auf einen Behälter aufgeklebt werden. Somit wäre es wünschenswert, unabhängig durchführbare Prozessschritte bei Ausfall einer speziellen Behandlungseinheit vorzuziehen, so dass zumindest ein Teil der auf die ausgefallene Behandlungseinheit folgende Prozesslinie weiter betrieben werden kann. Dabei muss ein Ausfall nicht den kompletten Stillstand der Behandlungseinheit bedeuten, sondern kann bereits durch eine vorübergehende Reduzierung des Durchsatzes an Behältern eintreten.

Der vorliegenden Erfindung liegt somit weiterhin die Aufgabe zugrunde, ein verbessertes Verfahren zur individuellen Steuerung der Transportelemente einer Transportvorrichtung in einer Behälterbehandlungsanlage zur Verfügung zu stellen, welches die oben genannten Nachteile überwindet und insbesondere einen Weiterbetrieb von Teilen der Prozesslinie bei Ausfall einer Behandlungseinheit erlaubt.

Üblicherweise umfasst eine Transportvorrichtung zum individuellen Steuern einer Vielzahl von einzeln steuerbaren Transportelementen eine Transportbahn, welche mittels entlang der Transportbahn angebrachter Wechselwirkungselemente eine Kraft auf an den Transportelementen angebrachte Reaktionselemente mittels mechanischer und/oder elektromagnetischer Wechselwirkung ausübt. Durch gezieltes Ansteuern des Reaktionselements eines bestimmten Transportelements und/oder einer oder mehrerer Wechselwirkungselemente in einem begrenzten Bereich der Transportbahn kann diese Kraftausübung auf ein bestimmtes Transportelement beschränkt werden, wodurch das Transportelement einzeln und unabhängig von anderen Transportelementen entlang der Transportbahn geleitet werden kann. Dabei kann das Transportelement durch die Wechselwirkung beschleunigt, abgebremst oder mit konstanter Geschwindigkeit entlang der Transportbahn geführt werden. Im Allgemeinen sind die Reaktionselemente der einzeln steuerbaren Transportelemente, insbesondere im Falle elektromagnetischer Wechselwirkung, derart ausgelegt, dass sich zwischen zwei entlang der Transportbahn benachbarten Transportelementen eine abstoßende Wechselwirkung ergibt, sodass Kollisionen vermieden oder zumindest abgeschwächt werden. Daher lässt sich der Abstand solcher benachbarter Transportelemente nur gegen diese abstoßende Kraft verringern.

In bestimmten Situationen während des Produktionsablaufs, z. B. bei Verarbeitung mehrerer Behälter zu einem Gebinde, bei synchronem Transport mehrerer Transportelemente entlang längerer Transportstrecken sowie bei hoher Verarbeitungs- bzw. Förderrate einzelner Behandlungseinheiten bzw. Fördervorrichtungen, kann es jedoch wünschenswert sein, benachbarte Transportelemente ohne Lücke, d. h. mit einem minimalen Abstand, welcher von der Form der Transportelemente und/oder der transportierten Behälter abhängt, gemeinsam, d. h. mit konstantem Abstand, zu führen. Aufgrund der abstoßenden Kraft zwischen den Reaktionselementen benachbarter Transportelemente wird zu diesem Fahren ohne Lücke jedoch zusätzliche Energie benötigt.

Der vorliegenden Erfindung liegt somit weiterhin die Aufgabe zugrunde, ein synchrones Fahren benachbarter Transportelemente energieeffizient zu ermöglichen.

DE4133114A1 offenbart ein Verfahren gemäß dem Oberbegriff des Anspruchs 1 und eine Vorrichtung gemäß dem Oberbegriff des Anspruchs 5.

### Beschreibung der Erfindung

Die oben genannten Aufgaben werden gelöst durch ein Verfahren gemäß Anspruch 1 und durch eine Vorrichtung gemäß Anspruch 5.

Die Transportbahn und die Vielzahl der einzeln steuerbaren Transportelemente, welche bewegbar an der Transportbahn angeordnet sind, können Teil einer Transporteinrichtung sein, welche die Behälter von einer Aufnahmestelle oder einer Behälterbehandlungseinheit zu einer prozesstechnisch nachgeschalteten Behälterbehandlungseinheit oder einer Abgabestelle transportiert. Unter Transporteinrichtungen werden hier und im Folgenden Fördereinrichtungen verstanden, die für die Behälter Transportelemente aufweisen, welche in einem geschlossenen Kreislauf gefördert werden. Dies schließt jedoch nicht aus, dass zumindest Teilstrecken der Transporteinrichtung keinen geschlossenen Kreislauf bilden.

Die Positionen der Vielzahl von Transportelementen sind hier und im Folgenden in Bezug auf die Transportbahn zu verstehen, an welcher die Transportelemente angeordnet sind. Dabei ist der Abstand eines ersten Transportelements von einem zweiten Transportelement als der Abstand der beiden Transportelemente entlang der Transportbahn, z. B. entlang einer Führungsschiene der Transportbahn definiert. insbesondere kann unter dem Abstand des ersten Transportelements von dem zweiten Transportelement die Länge der kürzesten Verbindung, im Hinblick auf potentielle Verzweigungen der Transportbahn und/oder geschlossener Teile der Transportbahn, entlang der Transportbahn verstanden werden. Erfindungsgemäß können die Transportelemente zum Transport der Behälter einzeln steuerbar entlang der Transportbahn geführt werden. Insbesondere kann dieses einzeln steuerbare und gegenseitig unabhängige Bewegen der Transportelemente durch eine Wechselwirkung der Transportelemente mit der Transportbahn geschehen (siehe weiter unten).

Die Vielzahl von einzeln steuerbaren Transportelementen umfasst erfindungsgemäß wenigstens zwei Transportelemente zum Transportieren jeweils eines oder mehrerer Behälter, die an der Transportbahn bewegbar angeordnet sind. Insbesondere kann die Vielzahl von Transportelementen eine Vielzahl von gleichgestalteten Transportelementen umfassen, welche einzeln und unabhängig voneinander entlang der Transportbahn bewegt werden können. Dies schließt jedoch nicht aus, dass sich einzelne Transportelemente bezüglich eines oder mehrerer Merkmale voneinander unterscheiden. Insbesondere kann die Vielzahl von Transportelementen wenigstens zwei Gruppen von jeweils gleichgestalteten Transportelementen umfassen, welche sich untereinander aufgrund wenigstens eines Merkmals, z. B. eines funktionalen Elementes wie eines Greifelements und/oder einer Ausführung des weiter unten beschriebenen Reaktionselementes, unterscheiden. Die Anzahl der Transportelemente an der Transportbahn ist dabei prinzipiell beliebig und lediglich durch die Länge der Transportbahn begrenzt, solange nur mindestens zwei Transportelemente vorhanden sind. Zur Aufnahme des mindestens einen Behälters an einer Aufnahmestelle und zur Abgabe der Behälter an einer Abgabestelle können die Transportelemente mit einer geeigneten Haltevorrichtung, z. B. in Form eines Greifelements, ausgestaltet sein. Das Greifelement kann dabei passiv oder aktiv steuerbar ausgebildet sein. Insbesondere sind Greifelemente zum formschlüssigen oder kraftschlüssigen Greifen eines Halsbereichs der Behälter, z. B. beim sog. Neckhandling von Kunststoffflaschen, vorstellbar, wobei der gehaltene Behälter beim formschlüssigen Greifen um seine Längsachse in dem Greifelement drehbar gelagert ist. Zudem kann das Greifelement schwenkbar und/oder höhenverstellbar ausgebildet sein.

Behälter im Sinne der Erfindung sind insbesondere Getränkeflaschen, aber auch andere Behälter für Lebensmittel, Medikamente, Hygieneartikel, Reinigungsmittel oder dergleichen, wie z. B. Dosen, Glasflaschen oder andere Glasbehälter mit Deckel, Verpackungen auf der Basis von Karton oder Verbundstoffen, Tetrapack, oder ähnliches. Ebenso sind bei Behältern aus Kunststoff auch Zwischenprodukte, insbesondere Vorformlinge zum Streckblasen der Behälter umfasst. Des Weiteren sind unter Behältern im Sinne der Erfindung auch zusammengestellte Gebinde mit mehreren Behältern zu verstehen.

Die Transportelemente können als Läufer, Puck, Schlitten, Shuttle oder dergleichen ausgebildet sein, welche durch Wechselwirkung mit der Transportbahn bewegt werden. Jedes Transportelement kann dabei je nach Bedarf an der Transportbahn beschleunigt, abgebremst, mit konstanter Geschwindigkeit bewegt oder auch zeitweise ganz angehalten werden. Durch individuelles Steuern der Transportelemente lässt sich somit ein variables Weg-Zeit-Profil jedes einzelnen Transportelements realisieren. Ein solches individuelles Weg-Zeit-Profil wird hier und im Folgenden als Verfahrprofil des jeweiligen Transportelements bezeichnet. Dabei kann das Verfahrprofil sowohl eine Position des Transportelements entlang der Transportbahn in Abhängigkeit von der Zeit als auch die Geschwindigkeit des Transportelements in Abhängigkeit von der Zeit umfassen. Zu jedem Transportelement der Vielzahl von Transportelemente kann insbesondere ein separates, individuelles Verfahrprofil in der Steuer- und/oder Regeleinheit der Behälterbehandlungsanlage, beispielsweise in einer Speichereinheit, abgelegt sein.

Zur individuellen Unterscheidung kann mindestens ein Transportelement aus der Vielzahl von Transportelementen eine eindeutige Identifikationseinheit, z. B. in Form eines Strichcodes, auslesbaren Speicherchips, eines aufgedruckten, aufgeklebten und/oder eingravierten alphanumerischen Codes, etc., umfassen, wobei durch eine oder mehrere geeignete Identifikationserfassungsvorrichtungen entlang der Transportbahn eine Identifikation des Transportelements, welches die entsprechende Identifikationserfassungsvorrichtung passiert, ermöglicht wird. Die Identifikationseinheit des Transportelements kann insbesondere zum gezielten Leiten des Transportelements gemäß einem vorgegebenen Verfahrprofil, z. B. zu einer bestimmten Abgabestelle oder einer bestimmten Behälterbehandlungseinheit, eingesetzt werden.

Neben Daten zum Ansteuern von Wechselwirkungselementen der Transportbahn und/oder Reaktionselementen der Transportelemente (siehe unten) kann ein vorgegebenes Verfahrprofil auch Steuerparameter zum Schalten von Weichen der Transportbahn umfassen. In Abhängigkeit von den vorgegebenen Verfahrprofilen steuert und/oder regelt die Steuer- und/oder Regeleinheit die Wechselwirkungselemente der Transportbahn und/oder Reaktionselemente der Transportelemente und/oder Weichen der Transportbahn derart, dass das jeweilige Transportelemente sich gemäß dem jeweiligen vorgegebenen Verfahrprofil entlang der Transportbahn bewegt.

Die Verfahrprofile der Transportelemente können hierbei automatisch in Abhängigkeit von einem zu behandelnden Behälter und/oder Produkt und/oder in Abhängigkeit von Betriebszuständen der Behälterbehandlungseinheiten, insbesondere von einem Durchsatz an Behältern pro Zeiteinheit, vorgegeben werden. Dabei kann zum Anfahren der Behandlungsanlage eine Initialisierung durchgeführt werden, welche beispielsweise die Positionen der Transportelemente bestimmt. Die Verfahrprofile können zudem vom Betreiber den gewünschten Produktionszielen/- bedingungen angepasst werden.

Die Form der Transportbahn ist grundsätzlich beliebig. Insbesondere kann die Transportbahn im Wesentlichen geschlossen sein, wobei im Wesentlichen geschlossen bedeutet, dass die Transportbahn mindestens einen geschlossenen Weg für die Transportelemente ermöglicht. In einer Ausführungsform kann dies durch Bereitstellen einer Rückführstrecke als Teil der Transportbahn realisiert werden, wobei die Rückführstrecke ein Rückführen der Transportelemente von einer Abgabestelle zu einer Aufnahmestelle ermöglicht. Die Transportbahn kann jedoch auch zumindest teilweise offen ausgestaltet sein, in derart dass wenigstens eine Teilstrecke der Transportbahn als Sackgasse für die Transportelemente ausgeführt ist, wobei eine Rückführung der Transportelemente durch Umkehr der Bewegungsrichtung ermöglich werden kann. Insbesondere kann eine derartige Sackgasse an einer der Abgabestellen enden.

Zum Führen der Transportelemente beim Bewegen der Transportelemente entlang der Transportbahn kann die Transportbahn eine Führungsschiene und/oder einen Führungskanal aufweisen. Dementsprechend können die Transportelemente einen komplementären Führungskanal, ein komplementäres Führungselement, z. B. einen Führungsstift, und/oder eine oder mehrere geeignet angeordnete Führungsrollen aufweisen, welche z. B. mittels eines Spurkranzes auf der Führungsschiene der Transportbahn laufen. Eine Vielzahl alternativer Ausführungsformen, z. B. mittels Gleitlager, ist hier vorstellbar. Durch das Bereitstellen einer Führungsschiene auf der Transportbahn kann ein reibungsarmes Gleiten der Transportelemente entlang der Transportbahn ermöglicht werden. Darüber hinaus kann die Transportbahn über eine Lauffläche verfügen, auf welcher entsprechende Stützelemente, z. B. Stützrollen, abrollen bzw. gleiten können.

Erfindungsgemäß umfasst das Verfahren zum automatischen Anpassen von Verfahrprofilen der Vielzahl von Transportelementen das Bestimmen eines Betriebszustandes mindestens einer ersten bezüglich einer Position des ersten Transportelements entlang der Transportbahn stromabwärts angeordneten Behälterbehandlungseinheit.

Unter einem Behandlungszustand eines Behälters ist hier und im Folgenden insbesondere der Zustand des Behälters bezüglich der an dem Behälter durchgeführten bzw. noch durchzuführenden Prozessschritte zu verstehen. Insbesondere kann der Behandlungszustand widerspiegeln, ob ein bestimmten Prozessschritt, wie z.B. das Befüllen oder Etikettieren des Behälters, fehlerfrei bzw. vollständig durchgeführt wurde, so dass der Behälter mittels weiterer Prozessschritte behandelt werden kann. Ebenso kann der Behandlungszustand einen fehlerhaften und/oder beschädigten Behälter bezeichnen. Ein beschädigter Behälter kann hierbei auch unabhängig von den bereits durchgeführten Prozessschritten auftreten, beispielsweise als geborstene Flasche, und auch durch den Transport der Behälter selbst verursacht werden.

Das Bestimmen des Behandlungszustandes eines von einem Transportelement mitgeführten Behälters kann hierbei vorzugsweise vor der Behandlung durch eine Behandlungseinheit, insbesondere mittels einer stromaufwärts von der Behandlungseinheit angeordneten Prüfeinheit erfolgen. Eine solche Prüfeinheit kann beispielsweise in Form einer Lichtschranke, z.B. zum Prüfen eines Füllstandes eines Behälters ausgebildet sein. Ebenso kann die Prüfeinheit eine Messvorrichtung zum Bestimmen des Gewichts eines mitgeführten Behälters umfassen, wodurch sowohl Füllstand als auch grobe Beschädigungen detektiert werden können. Weiterhin ist eine optische Kontrolleinheit, beispielsweise als optischer Scanner oder Kamera mit nachgeschalteter Bildverarbeitung denkbar, um z.B. Beschädigungen des Behälters oder aufgebrachter Etiketten oder Fehler aufgedruckter Druckbilder zu detektieren. Eine Vielzahl weiterer Prüfeinheiten sind im Stand der Technik bekannt. Derartige Prüfeinheiten sind beispielweise Pyrometer, Thermokameras, Metalldetektoren, Farbsensoren, Fremdstoffinspektoren, Schnüffler, oder auch Inspektoren zur Füllstands-, Verschluss- bzw. Dichtigkeitskontrolle. Der Behandlungszustand des mitgeführten Behälters kann dabei während des Passierens des Transportelements an der Prüfeinheit bestimmt werden und darüber hinaus via Kabelverbindung oder kabellos als codiertes Signal an die Steuer- und/oder Regeleinheit übertragen werden. Insbesondere kann auf diesem Wege jeder Behälter, welcher der Behandlungseinheit zur Behandlung im Zulauf zugeführt wird, vor Erreichen der Behandlungseinheit derart getestet werden, dass der durchzuführende Prozessschritt in der Behandlungseinheit erfolgreich durchgeführt werden kann. Insbesondere können fehlerhafte Behälter rechtzeitig erkannt und entsprechend behandelt werden (siehe unten).

Unter einem Betriebszustand einer Behälterbehandlungseinheit ist hier und im Folgenden die Kapazität der Behandlungseinheit zum Durchführen eines bestimmten Prozessschrittes an den Behältern zu verstehen. Ein Betriebszustand kann dabei sowohl einen vollständigen Ausfall der Behandlungseinheit, z.B. aufgrund einer Störung oder fehlender Versorgungsmaterialien wie Drucktinte oder Etiketten, als auch einen eingeschränkten Durchsatz an Behältern pro Zeiteinheit umfassen. Zum automatischen Bestimmen des Betriebszustandes der Behandlungseinheit kann die Behandlungseinheit eine geeignete Testvorrichtung umfassen, welche von dem jeweils durchzuführenden Prozessschritt abhängen kann. Zudem kann die Behandlungseinheit eine Signalvorrichtung umfassen, welche den bestimmten Betriebszustand an die Steuer- und/oder Regeleinheit via Kabelverbindung oder kabellos übermittelt. Der Betriebszustand der Behandlungseinheit kann hierbei kontinuierlich oder in vorgegebenen Zeitabständen periodisch bestimmt werden.

Bei Ausfall oder reduziertem Durchsatz einer Behälterbehandlungseinheit kann die Steuer- und/oder Regeleinheit somit automatisch ein Verfahrprofil eines sich stromaufwärts von der Behandlungseinheit befindlichen Transportelements derart anpassen, dass keine oder weniger Transportelemente pro Zeiteinheit der Behandlungseinheit zugeführt werden. Dadurch können ein Verstopfen der Behandlungseinheit und/oder weitere Beschädigungen an Behältern und/oder an der Behandlungseinheit verhindert werden. Bei Ausfall kann die Behandlungseinheit getrennt von dem Rest der Behälterbehandlungsanlage abgefahren und anschließend von dem Bedienpersonal gewartet werden. Das Anpassen des Verfahrprofils des Transportelements kann ein Anpassen der Geschwindigkeit des Transportelements und/oder des Weges des Transportelements, beispielsweise durch Schalten entsprechender Weichen, umfassen. Dabei können nach Bedarf die Verfahrprofile mehrerer oder aller Transportelemente im Zulauf zu der Behandlungseinheit, und, bei länger andauerndem Ausfall der Behandlungseinheit, auch der übrigen Transportelemente an die veränderte Behandlungssituation angepasst werden. Durch Puffern von Transportelementen mit behandelten Behältern stromabwärts von der Behandlungseinheit lässt sich zudem ein vorübergehender Ausfall der Behandlungseinheit zeitweise ausgleichen.

Erfindungsgemäß wird das erste Transportelement mittels der Steuer- und/oder Regeleinheit als Teil eines Stroms an Transportelementen bewegt. Anders ausgedrückt bildet die Vielzahl von Transportelementen, welche mittels der Steuer- und/oder Regeleinheit gemäß vorgegebener Verfahrprofile entlang der Transportbahn bewegt werden, einen Strom an Transportelementen, welche Behälter zur Behandlung durch eine oder mehrere entlang einer Prozessstrecke der Transportbahn angeordnete Behälterbehandlungseinheiten mitführen. Ein solcher Strom an Transportelementen kann beispielsweise eine erste Behälterbehandlungseinheit, welche einen ersten Prozessschritt an den transportierten Behältern durchführt, mit einer zweiten Behälterbehandlungseinheit, welche einen weiteren, darauf folgenden Prozessschritt an den Behältern durchführt, verbinden. Ebenso kann ein solcher Strom einen der oben beschriebenen Zuförderer mit einer Behälterbehandlungseinheit verbinden und/oder eine Behälterbehandlungseinheit mit einem der oben beschriebenen Abförderer verbinden. Die Verfahrprofile einzelner oder aller Transportelemente können dabei in Abhängigkeit von einem Behandlungszustand der mitgeführten Behälter und/oder einem Betriebszustand der Behälterbehandlungseinheiten automatisch angepasst werden, so dass einzelne Transportelemente umgelenkt, gepuffert oder ausgeschleust werden können oder ganze Teile des Stroms umgelenkt werden können.

Erfindungsgemäß wird die Vielzahl der einzeln steuerbaren Transportelemente mittels einer Steuer- und/oder Regeleinheit, z. B. in Form eines Prozessrechners, entlang der Transportbahn geführt. Die Steuer- und/oder Regeleinheit kann dabei Teil der Steuer- und/oder Regeleinheit der Behälterbehandlungsanlage sein oder als separate Steuer- und/oder Regeleinheit der Transporteinrichtung ausgebildet sein. Weiterhin kann die Steuer- und/oder Regeleinheit durch eine zentrale Steuer- und/oder Regeleinheit und/oder durch dezentral an den Transportelementen angeordnete Steuer- und/oder Regeleinheiten realisiert werden. Die eine oder mehrere Steuer- und/oder Regeleinheiten können dabei derart ausgebildet sein, dass sie sowohl die elektrischen Wicklungen der Transportbahn und/oder der Transportelemente individuell steuern und/oder regeln als auch die Stellung einer oder mehrerer Weichen entlang der Transportbahn steuern. Dabei kann wie oben beschrieben die Steuerung und/oder Regelung der Elektromagnete der Transportbahn und/oder der Transportelemente insbesondere in Abhängigkeit der bestimmten Positionen der Transportelemente erfolgen. Darüber hinaus kann die Stromstärke durch die entsprechenden elektrischen Wicklungen in Abhängigkeit von der benötigten Kraft, d. h. in Abhängigkeit von einem Beladungszustand eines Transportelements und/oder einer gewünschten Beschleunigung/Abbremsung bzw. Geschwindigkeit, d.h. von einem gewünschten Verfahrprofil des Transportelements geregelt werden. Des Weiteren können die eine oder mehrere Steuer- und/oder Regeleinheiten als speicherprogrammierbare Steuereinheit/en SPS ausgebildet sein.

Gemäß einer Weiterbildung kann das Bewegen der Vielzahl von Transportelementen zumindest teilweise durch magnetische Wechselwirkung des jeweiligen Transportelements mit der Transportbahn erfolgen. Erfindungsgemäß sind die Transportbahn und die Transportelemente derart ausgestaltet, dass jedes Transportelement einzeln steuerbar von einer Aufnahmestelle zu einer Abgabestelle geleitet werden kann. Dies bedeutet, dass die Transportelemente jeweils mindestens ein Reaktionselement aufweisen, welches mittels mechanischer und/oder elektromagnetischer Wechselwirkung mit entlang der Transportbahn angeordneten Wechselwirkungselementen eine Kraft erfährt, durch welche das jeweilige Transportelement beschleunigt und somit bewegt werden kann. Durch gezieltes Ansteuern des Reaktionselements eines bestimmten Transportelements und/oder einer oder mehrerer Wechselwirkungselemente in einem begrenzten Bereich der Transportbahn kann diese Kraftausübung auf ein bestimmtes Transportelement beschränkt werden, wodurch das Transportelement einzeln und unabhängig von anderen Transportelementen entlang der Transportbahn geleitet werden kann. Somit kann das erfindungsgemäße Bewegen mindestens des ersten Transportelements durch gezieltes Ansteuern des jeweiligen Reaktionselements und/oder der jeweiligen Wechselwirkungselemente in dem entsprechenden Bereich der Transportbahn erfolgen. Dabei erfolgt die individuelle Steuerung der Transportelemente bzw. das Ansteuern der Reaktionselemente und/oder der Wechselwirkungselemente mittels der Steuer- und/oder Regeleinrichtung der Behälterbehandlungsanlage.

Dazu kann insbesondere ein Teil der Transportbahn mit einem magnetischen Linearantrieb, z. B. in Form eines asynchronen Linearmotors, ausgestattet sein. Dazu wird der entsprechende Abschnitt der Transportbahn mit einer Vielzahl von elektrischen Wicklungen in Form von einzeln ansteuerbaren Elektromagneten ausgerüstet. Um eine magnetische Wechselwirkung zwischen einem Transportelement und den einzeln ansteuerbaren Elektromagneten der Transportbahn zu erzeugen, kann das Transportelement mit einem oder mehreren Permanentmagneten bzw. nicht schaltenden Elektromagneten oder Eisenkernen ausgestattet werden. In einer möglichen Ausführung ist das Transportelement als ein passives Transportelement ausgeführt, welches durch Wechselwirkung mit den von den einzeln ansteuerbaren Elektromagneten der Transportbahn erzeugten elektromagnetischen Wechselfeldern bewegt wird. Der mindestens eine Permanentmagnet bzw. nicht schaltende Elektromagnet bzw. Eisenkern des Transportelements bildet somit das oben erwähnte Reaktionselement, während die einzeln ansteuerbaren Elektromagnete der Transportbahn die oben erwähnten Wechselwirkungselemente bilden. Bevorzugt ist bei Verwendung von passiven Transportelementen eine Lokalisierungseinheit an der Transportbahn angebracht, um die Lage wenigstens eines Transportelements und bevorzugt aller Transportelemente zu ermitteln und an eine Steuer- und/oder Regeleinheit zur Steuerung der Elektromagnete der Transportbahn weiterzugeben. Die Stromstärke durch die elektrischen Wicklungen der Transportbahn kann von der Steuer- und/oder Regeleinheit in Abhängigkeit von einem Kraftbedarf des zu bewegenden Transportelements automatisch angepasst werden. Durch individuelles Steuern und/oder Regeln der Stromstärke durch einzelne Wicklungen der Transportbahn kann das Transportelement beschleunigt, abgebremst oder mit einer konstanten vorgegebenen Geschwindigkeit bewegt werden. Insbesondere kann durch individuelles Regeln der Stromstärke durch einzelne Wicklungen ein in der Steuer- und/oder Regeleinheit der Behälterbehandlungsanlage vorgegebenes Verfahrprofil des ersten Transportelements realisiert werden.

Bei einer alternativen Ausführungsform ist das Transportelement als aktives Transportelement mit elektrischen Wicklungen versehen, welche die für den Antrieb notwendigen magnetischen Wechselfelder aufbringen können. Entsprechend wird der Abschnitt der Transportbahn mit Permanentmagneten bzw. nicht schaltenden Elektromagneten versehen. Hierbei können sowohl die für den Antrieb nötige elektrische Energie als auch für die Steuerung nötige Signale via Induktionsübertragung an die Transportelemente übertragen werden. Die Steuerung kann sich demnach dezentral auf den jeweiligen Transportelementen befinden oder auch zentral in einer eigenen Steuereinheit untergebracht sein. Alternativ dazu kann die nötige elektrische Energie über eine entlang der Transportbahn angeordnete Leitung an die Transportelemente übertragen werden. Des Weiteren ist eine Kombination der Ausführung der Transportelemente als aktive Transportelemente mit einer Transportbahn mit einzeln ansteuerbaren Elektromagneten denkbar.

Neben dem oben beschriebenen, als Magnettrasse ausgebildeten Teil der Transportbahn kann die Transportbahn weiterhin wenigstens eine Teilstrecke umfassen, entlang derer das Transportelement mit einer konstanten Geschwindigkeit bewegt werden kann. Die Teilstrecke kann hierzu eine Antriebsvorrichtung in Form eines Transportbandes, einer Transportkette oder von Ähnlichem umfassen. Durch Kombination von Teilstrecken mit Magnetantrieb und Teilstrecken mit einem mechanischen Antrieb können die Installationskosten der gesamten Transporteinrichtung gesenkt werden.

Gemäß einer weiteren Weiterbildung kann die Position des ersten Transportelements mittels einer Vielzahl von entlang der Transportbahn angeordneten Sensoren, insbesondere Magnetfeldsensoren, bestimmt werden. Insbesondere kann durch regelmäßige und periodische Anordnung von Sensoren entlang zumindest eines Teilstücks der Transportbahn die Position eines Transportelements auf diesem Teilstück der Transportbahn bestimmt werden. Dabei kann der Sensor als optischer Sensor, elektrischer Sensor, elektromagnetischer Sensor oder mechanischer Sensor ausgebildet sein, wobei z. B. durch Messen einer Lichtreflektion an einem Reflektorelement des Transportelements, durch Induktion eines elektromagnetischen Signals aufgrund der Bewegung des Transportelements, durch Änderung des elektrischen Widerstandes des Sensors unter Ausnutzung eines magnetoresistiven Effektes, z. B. aufgrund des magnetischen Flusses eines magnetischen Referenzelements, insbesondere eines Permanentmagneten, oder des Reaktionselements des Transportelements, oder durch lokale Druckmessung aufgrund des Gewichts des Transportelements die Position des Transportelements im Bereich des Sensors bestimmt werden. Ein elektromagnetischer Sensor kann dabei als Hallsensor ausgebildet sein, welcher auch dann ein Signal liefert, wenn das Magnetfeld, in dem er sich befindet, konstant ist. Ebenso ergibt sich bei der Ausführung eines elektromagnetischen Sensors als Magnetfeldsensor auf der Grundlage magnetoresistiver Effekte, wie des anisotropen magnetoresisitven Effekts (AMR-Effekt), des "gigantischen" magnetoresistiven Effekts (GMR-Effekt), sowie weiterer magnetoresistiver Effekte wie des CMR-Effekts und des TMR-Effekts, eine Änderung des elektrischen Widerstandes, welche abhängig von dem zu messenden Magnetfeld ist. Sowohl Hallsensoren als auch magnetoresistive Sensoren erlauben somit das Bestimmen der Position eines Transportelements entlang der Transportbahn auch ohne induktive Effekte, d. h. auch bei still stehendem Transportelement. Dabei detektiert der entsprechende Sensor eine lokale Veränderung des Hintergrundmagnetfelds durch das Reaktionselement, insbesondere durch einen daran angebrachten Permanent- bzw. Elektromagneten, des Transportelements. Alternativ oder zusätzlich kann das Transportelement eine Signaleinheit aufweisen, welche ein Positionssignal erzeugt. Das Positionssignal kann dann durch geeignete Detektoren im Bereich der Transporteinrichtung lokalisiert werden, um die Position des Transportelements entlang der Transportbahn zu bestimmen. Die Signaleinheit des Transportelements kann insbesondere als RFID-Chip ausgebildet sein.

Gemäß einer Weiterbildung kann das Bestimmen des Betriebszustandes der ersten Behälterbehandlungseinheit ein Vergleichen des bestimmten Betriebszustandes mit einem vorgegebenen Sollbetriebszustand umfassen, wobei das Verfahrprofil des ersten Transportelements bei Abweichen des bestimmten Betriebszustandes von dem vorgegebenen Sollbetriebszustand derart angepasst wird, dass das erste Transportelement die erste Behälterbehandlungseinheit entlang einer Bypassstrecke der Transportbahn umfährt.

Der Sollbetriebszustand der ersten Behälterbehandlungseinheit kann mittels der Steuer- und/oder Regeleinheit automatisch oder manuell vom Bedienpersonal in Abhängigkeit des zu behandelnden Behälters bzw. Produkts und des durchzuführenden Prozessschrittes vorgegeben werden und kann insbesondere einen gewünschten Durchsatz an Behältern pro Zeiteinheit umfassen. Wird durch Vergleichen des bestimmten Betriebszustandes mit dem Sollbetriebszustand ein Abweichen über vorgegebene Toleranzgrenzen hinaus festgestellt, so kann das Verfahrprofil des ersten Transportelements automatisch derart angepasst werden, dass das erste Transportelement die erste Behälterbehandlungsanlage entlang einer Bypassstrecke der Transportbahn umfährt, anstatt die erste Behälterbehandlungsanlage zu passieren. Hierzu kann die Bypassstrecke stromaufwärts von der ersten Behälterbehandlungsanlage mit der Transportbahn über eine steuerbare Weiche verbunden sein, welche von der Steuer- und/oder Regeleinheit gemäß dem modifizierten Verfahrprofil des ersten Transportelements geschaltet werden kann. Dadurch kann das erste Transportelement aus dem Zulauf zur ersten Behandlungseinheit auf die Bypassstrecke ausgeschleust werden.

Anschließend kann das erste Transportelement zur Durchführung weiterer, insbesondere vom Prozessschritt der ersten Behälterbehandlungseinheit unabhängiger, Prozessschritte stromabwärts von der ersten Behälterbehandlungseinheit wieder in die Prozessstrecke der Transportbahn eingeleitet werden. Dazu kann die Bypassstrecke stromabwärts von der erste Behandlungseinheit mittels einer steuerbaren Weiche mit der Prozessstrecke der Transportbahn verbunden sein. Somit kann das erste Transportelement durch gemäß dem modifizierten Verfahrprofil gesteuertes Schalten der jeweiligen Weiche und durch Ansteuern der Wechselwirkungselemente der Bypassstrecke an der ersten Behandlungseinheit vorbeigeführt werden. Das erste Transportelement umfährt somit gemäß seinem modifizierten Verfahrprofil die erste Behandlungseinheit. Bei reduziertem Durchsatz der ersten Behandlungseinheit können einzelne der Vielzahl von Transportelementen an der ersten Behandlungseinheit durch Anpassen der jeweiligen Verfahrprofile vorbeigeführt werden, um einen Rückstau vor der ersten Behandlungseinheit zu vermeiden. Bei vollständigem Ausfall der ersten Behandlungseinheit können insbesondere alle im Zulauf zur ersten Behandlungseinheit befindlichen Transportelemente an der ersten Behandlungseinheit vorbeigeführt werden, bis sie wieder instand gesetzt wurde.

Somit kann das Verfahrprofil zumindest des ersten Transportelements derart angepasst werden, dass das erste Transportelement nach Umfahren der ersten Behälterbehandlungseinheit einer entlang der Transportbahn stromabwärts von der ersten Behälterbehandlungseinheit angeordneten zweiten Behälterbehandlungseinheit zugeführt wird. Die Bypassstrecke kann jedoch auch Umfahrungen für mehr als die erste Behälterbehandlungseinheit umfassen. Insbesondere kann die Bypassstrecke für jede Behälterbehandlungseinheit der Behälterbehandlungsanlage eine separate Umfahrung sowie einen parallel zur Prozessstrecke verlaufenden Teil umfassen, welcher das Umfahren von mehr als einer Behandlungseinheit ermöglicht.

Gemäß einer Weiterbildung kann das Verfahrprofil des ersten Transportelements weiterhin derart angepasst werden, dass das erste Transportelement zumindest zeitweise entlang der Bypassstrecke gepuffert wird. Das Verfahrprofil kann dabei derart angepasst werden, dass das erste Transportelement auf die Bypassstrecke ausgeschleust und dort an einer vorgegebenen Position, beispielweise auf einer separaten Pufferstrecke der Bypassstrecke, angehalten wird. Somit können ein oder mehrere Transportelemente zumindest zeitweise auf der Bypassstrecke gespeichert, also gepuffert werden. Die gepufferten Transportelemente können anschließend entweder einer stromabwärts gelegenen zweiten Behälterbehandlungseinheit zugeführt, oder, nach Instandsetzung bzw. Erhöhung des Durchsatzes der ersten Behälterbehandlungseinheit zu einem Zulauf der ersten Behälterbehandlungseinheit rückgeführt werden.

Gemäß einer weiteren Weiterbildung kann das Verfahren ein erneutes Bestimmen eines Betriebszustandes der ersten Behälterbehandlungseinheit und ein Vergleichen des erneut bestimmten Betriebszustandes mit dem vorgegebenen Sollbetriebszustand sowie das Rückführen des ersten Transportelements zu einem Zulauf der ersten Behälterbehandlungseinheit umfassen, falls der erneut bestimmte Betriebszustand dem vorgegebenen Sollbetriebszustand entspricht. Insbesondere kann der Betriebszustand der ersten Behälterbehandlungseinheit in vorgegebenen, regelmäßigen Zeitabständen erneut bestimmt werden. Wurde die Behandlungseinheit wieder instand gesetzt bzw. ihr Durchsatz auf den Solldurchsatz erhöht, so kann gemäß der vorliegenden Weiterbildung das erste Transportelement zu einem Zulauf der Behandlungseinheit rückgeführt werden, um den fehlenden Prozessschritt nachzuholen. Dabei kann das Rückführen unmittelbar aus der Bypassstrecke erfolgen, z.B. falls das erste Transportelemente dort gepuffert wurde. Alternativ kann das Rückführen auch durch Ausschleusen des ersten Transportelements stromabwärts von einer zweiten oder weiteren Behälterbehandlungseinheiten über die Bypassstrecke erfolgen, nachdem bereits weitere Prozessschritte an dem mitgeführten Behälter des ersten Transportelements durchgeführt wurden. Die Bypassstrecke kann also in beide Richtungen betrieben werden, wobei bei Betrieb im Reversiermodus, also bei Rückführen des ersten Transportelements, das oder die rückzuführenden Transportelemente vorzugsweise an beliebigen Stellen der Prozessstrecke wieder eingespeist werden können. Somit können gleichzeitig in Gegenrichtung regulär behandelte Behälter entlang der Prozessstrecke kollisionsfrei transportiert werden. Zudem kann mittels der Bypassstrecke und des Anpassens der Verfahrprofile auch die Abfolge der Prozessschritte flexibel angepasst werden, oder einen Umbau der Behälterbehandlungsanlage vornehmen zu müssen.

Gemäß einer Weiterbildung kann das Bestimmen des Behandlungszustandes des von dem ersten Transportelement mitgeführten Behälters ein Vergleichen des bestimmten Behandlungszustandes mit einem vorgegebenen Sollbehandlungszustand umfassen, wobei das Verfahrprofil des ersten Transportelements bei Abweichen des bestimmten Behandlungszustandes von dem vorgegebenen Sollbehandlungszustand derart angepasst wird, dass ein Abstand des ersten Transportelements von einem dem ersten Transportelement im Strom unmittelbar vorauslaufenden zweiten Transportelement auf einen vorgegebenen Abstand reduziert wird. Der Sollbehandlungszustand kann in Abhängigkeit von dem zu behandelnden Behälter bzw. Produkt und insbesondere von einem Sollergebnis eines zuletzt durchgeführten Prozessschrittes automatisch oder manuell vom Bedienpersonal vorgegeben werden. Ein Sollbehandlungszustand kann beispielsweise eine Füllhöhe für ein in den Behälter einzufüllendes Produkt angeben. Ein Abweichen von dem Sollbehandlungszustand, insbesondere innerhalb vorgegebener Toleranzen, kann durch Vergleichen mit dem bestimmten Behandlungszustand des Behälters geprüft werden. Dabei können fehlerhafte bzw. ungenügend behandelte Behälter identifiziert werden.

Beispielweise kann eine Prüfeinheit an einem vorgegebenen Punkt der Transportbahn, d. h. an einem Checkpoint, stromaufwärts von der ersten Behälterbehandlungseinheit den Behandlungszustand der von den Transportelementen transportierten Behälter überprüfen und dabei Behälter, deren Behandlungszustand nicht den vorgegebenen Qualitätsrichtlinien, d. h. dem vorgegebenen Sollbehandlungszustand, entspricht, als fehlerhaft erkennen und/oder markieren. Ein solches Markieren kann unter anderem mechanisch durch Schalten eines an dem entsprechenden Transportelement angebrachten Schaltelements oder elektronisch durch Schreiben eines geeigneten Markierungssignals in eine Speichereinheit des Transportelements erfolgen. Fehlerhafte Behälter können beispielsweise beschädigte Behälter, falsch etikettierte Behälter, unvollständig gefüllte Behälter, verunreinigte Behälter oder ähnliche sein. Da fehlerhafte Behälter Ausschussware darstellen, wird deren Behandlung in weiteren Prozessschritten im Allgemeinen nicht durchgeführt. Dadurch können unter anderem Material und Energie eingespart werden.

Ein Transportelement, welches einen als fehlerhaft erkannten Behälter transportiert, d. h. für welches der bestimmte Behandlungszustand des Behälters von dem vorgegebenen Sollbehandlungszustand abweicht, kann an einem eigens dafür vorgesehenen Abförderer entlang der Transportbahn von diesem fehlerhaften Behälter entladen werden (siehe unten). Sollte es sich um den einzigen, von dem Transportelement transportierten Behälter handeln, so kann das entladene Transportelement weiterhin als Teil des Produktstroms mit diesem geführt werden. Alternativ dazu kann das Transportelement mit dem fehlerhaften Behälter vor oder nach dem Entladen des fehlerhaften Behälters z. B. durch Steuern einer Weiche der Transportbahn und entsprechendes Anpassen des jeweiligen Verfahrprofils aus dem Strom der Transportelemente ausgeschleust werden (siehe unten). Der Abförderer bzw. die Weiche kann sich insbesondere stromaufwärts von der ersten Behälterbehandlungseinheit und stromabwärts von der oben erwähnten Prüfeinheit befinden.

In beiden Fällen ergibt sich im Strom der Transportelemente, welche fehlerfreie Behälter transportieren, eine Lücke, welche wie bereits beschrieben zu Verzögerungen im Produktionsablauf bei nachfolgenden Behälterbehandlungseinheiten führen kann. Damit tritt also die Situation auf, dass sich zwischen einem zweiten und einem dritten Transportelement, welche jeweils einen oder mehrere fehlerfreie Behälter transportieren, entlang eines Teilstücks der Transportbahn mindestens das erste Transportelement befindet, welches mindestens einen als fehlerhaft erkannten Behälter transportiert. Am Ende der Teilstrecke wird dann das erste Transportelement entweder von dem fehlerhaften Behälter entladen und/oder aus dem Strom ausgeschleust. Dadurch ergibt sich jedoch eine Lücke in Form eines vergrößerten Abstands zwischen zwei benachbarten Transportelementen mit fehlerfreien Behältern, also zwischen dem zweiten und dem dritten Transportelement. Das erfindungsgemäße Verfahren gemäß der vorliegenden Weiterbildung umfasst daher ein Schließen dieser Lücke in dem Produktstrom durch Anpassen des Verfahrprofils zumindest des ersten Transportelements in der Art, dass ein Abstand des ersten Transportelements von einem dem ersten Transportelement im Strom unmittelbar vorauslaufenden zweiten Transportelement auf einen vorgegebenen Abstand reduziert wird. Unmittelbar vorauslaufend bedeutet hier und im Folgenden, dass sich zwischen dem ersten und dem zweiten Transportelement kein weiteres Transportelement entlang der Transportbahn befindet.

Der Abstand des ersten Transportelements von dem zweiten Transportelement ist hier und im Folgenden als Länge der kürzesten Verbindung zwischen den beiden Transportelementen entlang der Transportbahn zu verstehen. Anhand der in der Steuer- und/oder Regeleinheit abgelegten Verfahrprofile des ersten und zweiten Transportelements kann der Abstand der beiden Transportelemente mittels einer Prozesseinheit der Steuer- und/oder Regeleinheit jederzeit berechnet werden. Alternativ oder ergänzend kann der Abstand durch Bestimmen der Positionen der beiden Transportelemente mittels der oben beschriebenen Sensoren, Übermitteln der bestimmten Positionen an die Steuer- und/oder Regeleinheit und Berechnen des Abstandes aus den bestimmten Positionen ermittelt werden.

Das Verfahrprofil des ersten Transportelements kann dann derart angepasst werden, dass der Abstand des ersten von dem zweiten Transportelement auf einen vorgegebenen Abstand reduziert wird. Der vorgegebene Abstand kann dabei von einem Bediener der Behälterbehandlungsanlage und/oder einer Steuer- und/oder Regeleinrichtung der Behälterbehandlungsanlage, insbesondere in Abhängigkeit einer Verarbeitungsrate einer Behälterbehandlungseinheit und/oder Förderrate eines Zuförderers bzw. Abförderers vorgegeben werden (siehe unten).

Zur Reduzierung des Abstands zwischen dem ersten Transportelement und dem zweiten Transportelement kann neben dem Verfahrprofil des ersten Transportelements auch das Verfahrprofil des zweiten Transportelements angepasst werden. Dabei kann das Anpassen der Verfahrprofile des ersten und/oder des zweiten Transportelements insbesondere ein individuelles Beschleunigen oder Abbremsen des ersten und/oder des zweiten Transportelements entlang eines Teilstücks der Transportbahn umfassen. Dabei kann im Falle, dass sich das erste und/oder das zweite Transportelement bereits zu Beginn des Anpassens im Zustand der Bewegung befindet, ein Einstellen des Abstands des ersten Transportelements von dem zweiten Transportelement auf den vorgegebenen Abstand insbesondere ohne Umkehr der Bewegungsrichtung des ersten und/oder des zweiten Transportelements erfolgen. Da im Allgemeinen das erste und/oder das zweiten Transportelement als Teil eines Stroms an Transportelementen entlang der Transportbahn in eine vorgegebene Richtung bewegt werden, kann vorteilhafterweise das bezüglich dieser Richtung nachfolgende Transportelement der beiden Transportelemente, d. h. das erste Transportelement, gegenüber der Bewegungsgeschwindigkeit des vorauslaufenden Transportelements, d. h. des zweiten Transportelements beschleunigt werden, um eine Reduzierung des Abstands durch das Anpassen der Verfahrprofile zu erreichen. Durch Beschleunigen des nachfolgenden Transportelements kann eine Reduzierung des Flusses an Transportelementen in dem Strom vermieden werden. Analog hierzu kann vorteilhafterweise zu einer Vergrößerung des Abstandes das nachfolgende Transportelement abgebremst werden. Das erfindungsgemäße Verfahren ist jedoch nicht auf die oben beschriebenen Beispiele beschränkt, sondern kann ebenso das Reduzieren des Abstandes durch Beschleunigen des nachfolgenden und gleichzeitiges Abbremsen des vorauslaufenden Transportelements umfassen.

In einer weiteren Weiterbildung kann der vorgegebene Abstand der Hälfte einer vorgegebenen Teilung des Stroms an Transportelementen entlang zumindest eines Teils der Transportbahn entsprechen. Die Teilung eines Stroms bzw. Produktstroms bezeichnet hier und im Folgenden einen entlang eines Teils der Transportbahn konstanten Abstand zweier benachbarter, fehlerfreie Behälter transportierender Transportelemente, welcher in Abhängigkeit eines Durchsatzes bzw. einer Behandlungsrate einer auf den Teil der Transportbahn folgenden Behälterbehandlungseinheit sowie einer Geschwindigkeit der Transportelemente entlang des Teils der Transportbahn von der Steuer- und/oder Regeleinheit bestimmt wird. Da eine Behälterbehandlungseinheit im Allgemeinen zur Durchführung einer Behälterbehandlung eine feste Behandlungszeit benötigt, ist das Zuführen von unbehandelten Behältern in regelmäßigen Zeitabständen als Teil eines regulären Produktstroms erforderlich. Aus diesen regulären Zeitabständen und einer im Allgemeinen zeitlich und/oder räumlich konstanten Geschwindigkeit der Transportelemente entlang des Teils der Transportbahn vor der Behälterbehandlungseinheit ergibt sich somit ein erforderlicher konstanter Abstand der Transportelemente im Strom entlang des Teils der Transportbahn und somit eine vorgegebene Teilung des Stroms.

Um eine vorgegebene Teilung aufrecht zu erhalten, kann zusätzlich zum Anpassen des Verfahrprofils des ersten Transportelements, dessen mitgeführter Behälter als fehlerhaft erkannt wurde, das Verfahrprofil eines dem ersten Transportelement im Strom unmittelbar nachfolgenden dritten Transportelements von der Steuer- und/oder Regeleinheit derart angepasst werden, dass der Abstand des dritten von dem vorauslaufenden zweiten Transportelement der vorgegebenen Teilung entspricht, Anders ausgedrückt können die Verfahrprofile des ersten und dritten Transportelements in dem Fall, dass der bestimmte Behandlungszustand des von dem ersten Transportelement mitgeführten Behälters von dem vorgegebenen Sollbehandlungszustand abweicht, derart angepasst werden, dass sowohl das erste als auch das dritte Transportelement auf das vorauslaufende zweite Transportelement aufrücken. Die aufgrund des fehlerhaften Behälters entstandene Lücke wird dadurch zugefahren. Entsprechend können auch die Verfahrprofile weiterer nachfolgender Transportelemente derart angepasst werden, dass keine neue Lücken, d. h. Abweichungen von der vorgegebenen Teilung des Stroms auftreten. Insbesondere können im Zulauf zu der ersten Behälterbehandlungseinheit zusätzliche Transportelemente gepuffert werden, um eine eventuelle Lücke ausgleichen zu können. D. h. im Zulauf zu der ersten Behälterbehandlungseinheit können mehr Transportelemente vorgehalten werden, als aufgrund der vorgegebenen Teilung erforderlich sind, solange die Teilung des Stroms wenigstens unmittelbar vor der ersten Behälterbehandlungseinheit erreicht wird.

Durch Anpassen des Abstandes des zweiten und dritten Transportelements, zwischen denen sich das erste Transportelement mit dem fehlerhaften Behälter bzw. das von dem fehlerhaften Behälter entladene erste Transportelement nach Reduzierung seines Abstandes von dem zweiten Transportelement befindet, im Vorlauf zu der ersten Behälterbehandlungseinheit kann somit garantiert werden, dass die Transportelemente mit fehlerfreien Behältern, d. h. das zweite und das dritte Transportelement, die erste Behälterbehandlungseinheit mit der vorgegebenen Teilung erreichen. Die Teilung eines Stroms an Transportelementen ist im Allgemeinen abhängig von der jeweiligen Prozessstrecke, insbesondere von der jeweiligen Behälterbehandlungseinheit, und kann mit Hilfe des beschriebenen Verfahrens auch in Abhängigkeit von den zu behandelnden Behältern kurzfristig durch Anpassen der Verfahrprofile der Transportelemente mittels der Steuer- und/oder Regeleinheit angepasst werden. Dadurch wird ein rasches Umschalten der Behälterbehandlungsanlage auf ein anderes Produkt ermöglicht.

In dem Falle, dass das erste Transportelement nicht ausgeschleust wird, kann somit das erste Transportelement mittig zwischen dem dritten und dem zweiten Transportelement weitergeführt werden. Somit kann das erfindungsgemäße Verfahren weiterhin das Reduzieren des Abstands des dritten Transportelements von dem ersten Transportelement bzw. des Abstands des dritten Transportelements von dem zweiten Transportelement durch Anpassen der Verfahrprofile des dritten und/oder zweiten Transportelements und/oder des ersten Transportelements umfassen. Das erste Transportelement, welches sich entlang des Teils der Transportbahn als Teil des Stroms zwischen dem dritten und dem zweiten Transportelement befindet, ist somit insbesondere ein Transportelement mit einem fehlerhaften Behälter. Alternativ oder ergänzend kann das erste Transportelement jedoch auch ein Transportelement mit einem fehlerfreien Behälter sein, welcher zwecks einer Aufteilung des Stroms der Transportelemente und somit des Produktstroms über eine Weiche am Ende des erwähnten Teils der Transportbahn ausgeschleust wird.

Wie bereits oben erwähnt kann das Verfahren weiterhin das Entladen des ersten Transportelements von dem mitgeführten Behälter bei Abweichen des bestimmten Behandlungszustandes von dem vorgegebenen Sollbehandlungszustand umfassen. Der Behälter kann dabei von einem stromaufwärts von der ersten Behälterbehandlungseinheit angeordneten Abförderer aufgenommen und einer Verwertung durch Recycling zugeführt werden.

Alternativ zu einem fortgesetzten Mitbewegen des ersten Transportelements im Strom kann gemäß einer weiteren Weiterbildung das Anpassen des Verfahrprofils des ersten Transportelements bei Abweichen des bestimmten Behandlungszustandes von dem vorgegebenen Sollbehandlungszustand ein Ausschleusen des ersten Transportelements aus dem Strom an Transportelementen umfassen. Somit kann ein als fehlerhaft erkannter Behälter aus dem Produktstrom ausgeschleust werden. Hierzu kann die Transportbahn stromaufwärts von der ersten Behälterbehandlungseinheit über eine schaltbare Weiche mit einer Nebenstrecke der Transportbahn zum Ausschleusen des ersten Transportelements verbunden sein. Das angepasste Verfahrprofil kann somit auch das Schalten der Weiche zum Ausschleusen des ersten Transportelements umfassen. Die Nebenstrecke kann zusätzlich einen Abförderer zum Entladen des ersten Transportelements von dem mitgeführten Behälter aufweisen und darüber hinaus mit einer Rückführstrecke der Transportbahn zum Rückführen entladener Transportelemente zum Beginn der Prozessstrecke verbunden sein.

Wie bereits oben erwähnt kann in dieser Weiterbildung das Verfahren weiterhin ein Anpassen eines Verfahrprofils eines vor Ausschleusen des ersten Transportelements dem ersten Transportelement im Strom unmittelbar vorauslaufenden zweiten Transportelements und/oder eines Verfahrprofils eines vor Ausschleusen des ersten Transportelements dem ersten Transportelement im Strom unmittelbar nachfolgenden dritten Transportelements in der Art umfassen, dass ein Abstand des dritten Transportelements von dem zweiten Transportelement auf einen vorgegebenen Abstand reduziert wird. Dabei kann der vorgegebene Abstand insbesondere einer vorgegebenen Teilung des Stroms an Transportelementen entlang zumindest eines Teils der Transportbahn entsprechen. Hierunter ist insbesondere eine vorgegebene Teilung im Zulauf zu der ersten Behälterbehandlungseinheit zu verstehen, welche beispielweise in Abhängigkeit von einem Drucksatz und/oder Sollbetriebszustand der ersten Behälterbehandlungseinheit automatisch oder manuell durch das Bedienpersonal vorgegeben werden kann.

Durch Reduzieren des Abstands des dritten Transportelements von dem zweiten Transportelement nach Entladen und/oder Ausschleusen des ersten Transportelements kann ein konstanter Abstand benachbarter Transportelemente mit fehlerfreien Behältern in einem nachfolgenden Teil der Transportbahn erzielt werden. Dadurch kann eine sonst notwendige Lückenverarbeitung der folgenden Behälterbehandlungseinheiten vermieden werden, wodurch eine vorübergehende Reduzierung der Behandlungsrate aufgrund von Lücken vermieden werden kann. Die auf das dritte Transportelement folgenden Transportelemente können mittels der Steuer- und Regeleinheit durch Anpassen ihrer Verfahrprofile derart beschleunigt werden, dass sie entsprechend des vorgegebenen Abstandes auf das dritte Transportelement aufschließen. Zum endgültigen Ausgleich der Lücke kann des Weiteren die Behandlungsrate einer im Produktstrom stromaufwärts angeordneten Behälterbehandlungseinheit mittels der Steuer- und/oder Regeleinheit vorübergehend erhöht werden, sodass die entstandene Lücke vollständig geschlossen werden kann.

Da eine im Produktstrom stromabwärts angeordnete Behälterbehandlungseinheit derart gesteuert werden kann, dass sie nur die Behälter von Transportelementen in einem vorgegebenen zeitlichen bzw. räumlichen Abstand behandelt, kann durch Zusammenfahren einer Lücke, also durch das Weiterführen eines mit einem fehlerhaften Behälter beladenen oder entladenen ersten Transportelements zwischen dem dritten und dem zweiten Transportelement, deren Abstand auf den vorgegebenen Abstand eingestellt wurde, erreicht werden, dass das entladene erste Transportelement bzw. das erste Transportelement mit dem fehlerhaften Behälter in der Behälterbehandlungseinheit übersprungen wird. Dadurch kann auch ein entladenes bzw. ein einen fehlerhaften Behälter transportierendes Transportelement so lange weiter mit dem Produktstrom geführt werden, bis es an einer entsprechenden Stelle der Transportbahn ausgeschleust und/oder entladen werden kann.

Gemäß einer Weiterbildung kann der Behandlungszustand des von dem ersten Transportelement mitgeführten Behälter wie oben beschrieben im Zulauf zu der mindestens einen Behälterbehandlungseinheit bestimmt werden, wobei der vorgegebene Sollbehandlungszustand in Abhängigkeit von einer Position des ersten Transportelements entlang der Transportbahn vorgegeben ist. Da der vorgegebene Sollbehandlungszustand im Allgemeinen von den bereits durchgeführten Prozessschritten abhängt, kann der vorgegebene Sollbehandlungszustand in Abhängigkeit von der Position des ersten Transportelements vorgegeben werden. Insbesondere kann es sinnvoll sein, den Behandlungszustand, z. B. die erfolgreiche Durchführung eines oder mehrerer bereits erfolgter Prozessschritte, vor Durchführen des nächsten Prozessschritte, d. h. im Zulauf zu der nächsten Behälterbehandlungseinheit, zu bestimmen. Insbesondere kann im Zulauf zu einer oder mehreren Behälterbehandlungseinheiten jeweils eine entsprechende Prüfeinheit zum Bestimmen des jeweiligen Behandlungszustandes angeordnet sein. Dadurch lässt sich gewährleisten, dass nur fehlerfreie Behälter der Behandlung durch die jeweilige Behälterbehandlungseinheit unterworfen werden.

Gemäß einer Weiterbildung einer der ersten drei beschriebenen Weiterbildungen kann das Verfahren weiterhin umfassen:
Bestimmen eines Behandlungszustandes mindestens eines von einem zweiten Transportelement aus der Vielzahl der Transportelemente mitgeführten Behälters und
Anpassen des Verfahrprofils des ersten Transportelements und/oder des Verfahrprofils des zweiten Transportelements in Abhängigkeit von den bestimmten Behandlungszuständen der mitgeführten Behälter des ersten und zweiten Transportelements in der Art, dass ein Abstand des zweiten Transportelements von dem ersten Transportelement auf einen vorgegebenen Abstand reduziert wird,
wobei das erste und das zweite Transportelement entlang der Transportbahn unmittelbar benachbart sind, und
wobei das erste Transportelement bei Erreichen des vorgegebenen Abstands an das zweite Transportelement gekoppelt wird.

Unmittelbar benachbart bedeutet hier und im Folgenden, dass sich zwischen dem ersten und dem zweiten Transportelement kein weiteres Transportelement entlang der Transportbahn befindet. Somit können das erste und das zweite Transportelement theoretisch auf einen durch die Form des ersten und des zweiten Transportelements vorgegebenen Mindestabstand angenähert werden. Erfindungsgemäß umfasst das Anpassen der Verfahrprofile des ersten und/oder zweiten Transportelements in dieser Weiterführung ein Reduzieren des Abstands des ersten und des zweiten Transportelements, wobei das erste Transportelement bei Erreichen des vorgegebenen Abstands an das zweite Transportelement gekoppelt wird. Das erste Transportelement bildet somit bei Erreichen des vorgegebenen Abstands zusammen mit dem zweiten Transportelement einen sogenannten Zug, welcher nach Abschluss des Koppelvorgangs mit einem gemeinsamen Verfahrprofil gemeinsam mittels der Steuer- und/oder Regeleinheit entlang eines Teils der Transportbahn bewegt wird. Dabei bleiben die relativen Abstände zwischen den einzelnen Transportelementen des Zuges aufgrund der Kopplung auch ohne separate Steuerung bzw. Regelung konstant.

Die Bildung eines Zuges aus Transportelementen kann aus verschiedenerlei Gründen während der Prozessführung in einer Behälterbehandlungsanlage wünschenswert und von Vorteil sein. Einerseits kann durch Bilden eines Zuges der Abstand zwischen benachbarten Transportelementen minimiert werden, sodass eine Bearbeitungsrate einer Behälterbehandlungseinheit maximiert werden kann. Andererseits werden die Reaktionselemente unmittelbar benachbarter Transportelemente insbesondere beim Bewegen der Transportelemente durch magnetische Wechselwirkung mit der Transportbahn im Allgemeinen so angeordnet, dass sie sich abstoßen, sodass ein Bewegen der Transportelemente mit minimalem Abstand, d. h. ein Fahren ohne Lücke, zusätzliche Kraftaufwendung seitens der magnetischen Wechselwirkung erfordert und somit zusätzliche Energie benötigt wird. Durch Koppeln des ersten und zweiten Transportelements zu einem Zug entfällt dieser zusätzliche Kraft- bzw. Energieaufwand. Im Gegenteil können zu einem Zug gekoppelte Transportelemente sogar effektiver bewegt werden, da sie über eine grö-βere Anzahl an Reaktionselementen verfügen. Somit lässt sich durch Wechselwirkung mit der Transportbahn eine entsprechend größere Kraft auf die zu einem Zug verbundenen Transportelemente ausüben. Außerdem kann prozessbedingt ein Aufstauen bzw. Puffern von Transportelementen in einem bestimmten Teil der Transportbahn erwünscht sein, um z. B. ein Leerlaufen einer Behälterbehandlungseinheit zu vermeiden. Zu diesem Zweck können die zu einem Zug verbundenen Transportelemente entlang des Zulaufs zu einer solchen Behälterbehandlungseinheit gemeinsam geführt werden, um vor der Behandlung durch die Behälterbehandlungseinheit wieder entkoppelt zu werden.

Der Bildung eines Zuges aus mindestens dem ersten und dem zweiten Transportelement geht gemäß dieser Weiterbildung das Bestimmen der Behandlungszustände der Behälter des ersten und des zweiten Transportelements voraus. Insbesondere ist die Bildung eines Zuges im Allgemeinen nur dann wünschenswert, wenn der gebildete Zug Behälter mit gleichen oder ähnlichen Behandlungszuständen mitführt. Beispielsweise kann vor Bilden des Zuges geprüft werden, ob die bestimmten Behandlungszustände einem vorgegebenen Sollbehandlungszustand entsprechen. Z. B. können per Direktdruck bedruckte Behälter zweier oder mehrerer Transportelemente zum gemeinsamen Aushärten des Druckbildes in einer UV-Aushärtestation von einem gebildeten Zug mit minimalem Abstand der den Zug bildenden Transportelemente mitgeführt werden, nachdem eine Prüfeinheit geprüft hat, dass die jeweiligen Druckbilder den vorgegebenen Anforderungen entsprechen. Es versteht sich, dass ein Zug auch aus mehr als zwei Transportelementen gebildet werden kann. Wie oben beschrieben kann das Reduzieren des Abstands zwischen erstem und zweitem Transportelement durch Beschleunigung des nachfolgenden, z. B. des ersten, und/oder durch Verzögerung des vorauslaufenden, z. B. des zweiten, Transportelements erfolgen, indem ihre jeweiligen Verfahrprofile mittels der Steuer- und/oder Regeleinheit automatisch angepasst werden.

Der vorgegebene Abstand, bei Erreichen dessen das erste Transportelement an das zweite Transportelement gekoppelt wird, ist im Allgemeinen verschieden von der weiter oben beschriebenen vorgegebenen Teilung des Produktstroms. Insbesondere ist der vorgegebene Abstand für die Kopplung im Allgemeinen kleiner als die oben beschriebene vorgegebene Teilung. Der vorgegebene Abstand kann in Abhängigkeit von der Form und Ausdehnung der Transportelemente und/oder den zu behandelnden Behältern vorgegeben und in einer Speichereinheit der Steuer- und/oder Regeleinheit abgelegt sein.

In einer weiteren Weiterbildung erfolgt das Reduzieren des Abstands zumindest teilweise gegen eine magnetische Abstoßungswechselwirkung zwischen dem ersten und dem zweiten Transportelement. Dies kann insbesondere dann der Fall sein, wenn wie oben beschrieben das erste und zweite Transportelement zumindest teilweise durch magnetische Wechselwirkung mit der Transportbahn bewegt werden und dazu Reaktionselemente mit Elektro- und/oder Permanentmagneten aufweisen, welche derart angeordnet sind, dass sich eine magnetische Abstoßungswechselwirkung zwischen den Reaktionselementen benachbarter Transportelemente ergibt. Dies kann z. B. dadurch realisiert werden, dass die magnetischen Pole an der Vorder- und Rückseite, bezüglich der Bewegungsrichtung, der Transportelemente gleich sind. Insbesondere kann dies durch spiegelsymmetrische Anordnung der Magnete des Reaktionselements bezüglich einer Ebene senkrecht zur Bewegungsrichtung geschehen. Eine derartige Anordnung, bei der sich die Reaktionselemente benachbarter Transportelemente magnetisch abstoßen, dient unter anderem der Kollisionsvermeidung, wodurch die transportierten Behälter beschädigt werden könnten. Zum Annähern zweier Transportelemente gegen diese magnetische Abstoßungswechselwirkung ist daher eine Kraft erforderlich, welche beispielsweise durch die magnetische Wechselwirkung der Transportelemente mit der Transportbahn erzeugt werden kann. Nach erfolgtem Koppeln des ersten Transportelements an das zweite Transportelement wird diese Kraft durch die Kopplung der beiden Transportelemente aufgebracht, sodass der erreichte vorgegebene Abstand ohne zusätzliche Kraftaufwendung durch die Transportbahn konstant gehalten werden kann.

Gemäß einer weiteren Weiterbildung kann die Kopplung mechanisch und/oder magnetisch erfolgen. Eine mechanische Kopplung kann durch mechanische Kopplungselemente des ersten bzw. zweiten Transportelements realisiert werden. Da mechanische Kopplungselemente im Stand der Technik wohl bekannt sind, werden hier lediglich Haken, Ösen, Zapfen und Schlingen als Beispiele möglicher Ausführungen genannt. Eine magnetische Kopplung kann mittels eines oder mehrerer separater Magnete der Reaktionselemente, welche ausschließlich der Kopplung dienen, realisiert werden und/oder durch die Führungsmagnete der Reaktionselemente selbst, d. h. durch die Magnete, welche durch magnetische Wechselwirkung mit der Transportbahn dem Bewegen des Transportelements dienen.

Bei einer magnetischen Kopplung kann die Kopplung zumindest teilweise durch Umorientieren oder Umpolen eines oder mehrerer an dem ersten oder zweiten Transportelement angeordneter Magnete erfolgen. Durch Umpolen eines Elektromagneten eines der beiden unmittelbar benachbarten Transportelemente kann die zuvor beschriebene magnetische Abstoßungswechselwirkung in eine Anziehungswechselwirkung umgewandelt werden. Bei Umpolung eines separat zur Kopplung vorgesehenen Elektromagneten überwindet dabei die Anziehung zwischen dem umgepolten Elektromagnet und dem nicht umgepolten Elektromagnet des benachbarten Transportelements die wechselseitige Abstoßung der der Bewegung der Transportelemente dienenden Magnete auf den Reaktionselementen der benachbarten Transportelemente. In dieser Weiterbildung des erfindungsgemäßen Verfahrens wird davon ausgegangen, dass die sich jeweils entsprechenden Magnete der benachbarten Transportelemente vor dem Umorientieren oder Umpolen derart angeordnet sind, dass sie sich gegenseitig abstoßen. Das Umorientieren kann durch Drehen eines Permanent- bzw. Elektromagneten um eine Achse, insbesondere um eine Achse senkrecht zur Dipolachse des Magneten, erfolgen. Erfindungsgemäß werden zum Koppeln zweier unmittelbar benachbarter Transportelemente mittels magnetischer Kopplung nur Magnete von einem der beiden Transportelemente umorientiert oder umgepolt. Dies kann beispielsweise dadurch erreicht werden, dass die entsprechenden Magnete des ersten Transportelements drehbar gelagert bzw. schaltbar sind, während die entsprechenden Magnete des zweiten Transportelements fest mit dem Transportelement verbunden sind bzw. nicht schaltbar sind. Das Umpolen eines oder mehrerer an dem ersten oder zweiten Transportelement angeordneter Magnete kann mittels einer zentralen Steuereinheit oder einer an den Transportelementen angebrachten dezentralen Steuereinheit erfolgen. Die Kopplungselemente, welche umorientiert, umgepolt oder irgendwie mechanisch bewegt werden, stellen somit aktive Kopplungselemente dar, welche an komplementäre passive Kopplungselemente des zu koppelnden Transportelements, also nicht schaltende, unbewegliche bzw. feststehende Kopplungselemente, koppeln.

In einer weiteren Weiterbildung kann das Umorientieren mittels eines von der Steuer- und/oder Regeleinheit der Behälterbehandlungsanlage schaltbaren Nockens oder automatisch mittels magnetischer Wechselwirkung zwischen dem ersten und dem zweiten Transportelement erfolgen. Der schaltbare Nocken kann sich dabei an einer vorgegebenen Stelle der Transportbahn befinden und mittels eines Signals von der Steuer- und/oder Regeleinheit eingerückt oder ausgerückt werden. Beim Vorbeibewegen eines Transportelements mit einem drehbaren Magnet kann dann der ausgerückte Nocken in einen Bügel oder eine ähnliche mechanische Vorrichtung des Transportelements greifen, welcher durch die Bewegung des Transportelements relativ zu dem Nocken gedreht wird und damit den drehbaren Magnet umorientiert. Alternativ kann sich der schaltbare Nocken auch auf einer drehbar gelagerten Scheibe, welche den umzuorientierenden Magnet trägt, angeordnet sein und nach Ausrücken in einen komplementären Bügel entlang der Transportbahn greifen, um so ein Drehmoment bezüglich der Drehachse des umzuorientierenden Magneten zu erfahren. Durch die Verwendung eines schaltbaren Nockens wird eine schnelle Reaktionszeit möglich, da eine Nockenschaltung auch bei hoher Leistung bzw. hoher Geschwindigkeit des Transportelements entlang der Transportbahn durchführbar ist. Die Drehung des drehbar gelagerten Magneten kann des Weiteren gegen eine, insbesondere vorgespannte, Rückstellvorrichtung des Transportelements erfolgen, durch welche die ursprüngliche Orientierung des drehbaren Magneten nach einem Entkoppeln wieder hergestellt wird. Dabei kann der drehbare Magnet mittels einer oder mehrere Arretierungsvorrichtungen vor und/oder nach dem Umorientieren fixiert werden. Die eine oder mehrere Arretierungsvorrichtungen können hierbei ebenso wie der schaltbare Nocken mittels einer Steuer- und/oder Regeleinheit geschaltet werden.

In einer vorteilhaften Weiterführung kann das Umorientieren des einen oder der mehreren drehbar gelagerten Magnete automatisch mittels magnetischer Wechselwirkung zwischen dem ersten und dem zweiten Transportelement erfolgen. Bei Annäherung zweier sich abstoßender Magnete erfahren beide Magnete eine zunehmend abstoßende Kraft, welche die sich abstoßenden Pole der Magnete voneinander wegzubewegen sucht. Ist einer der Magnete drehbar gelagert, so führt diese abstoßende Kraft zu einem Drehmoment, welches den drehbaren Magnet so auszurichten versucht, dass sich beide Magnete maximal anziehen. Somit kann im Falle, dass mindestens einer der beiden Magnete drehbar gelagert ist, eine Umorientierung und somit ein Umschalten von abstoßender Wechselwirkung auf anziehende Wechselwirkung automatisch mittels magnetischer Wechselwirkung zwischen den beiden Magneten erfolgen.

Gemäß einer Weiterbildung können das erste und das zweite Transportelement nach der Kopplung mit einem gemeinsamen Verfahrprofil gemeinsam entlang eines Teils der Transportbahn bewegt werden. insbesondere können wie oben beschrieben das erste und das zweite Transportelement einen sog. Zug bilden, welcher mittels individueller Ansteuerung der Wechselwirkungselemente der Transportbahn als Einheit entlang der Transportbahn bewegt werden kann. Dabei kann ein solcher Zug einen Produktstrom mit minimaler Teilung bilden. Das Ansteuern der entlang der Transportbahn angeordneten Wechselwirkungselemente kann nach Kopplung des ersten und zweiten Transportelements automatisch durch die Steuer- und/oder Regeleinheit an die Anordnung der Reaktionselemente des so gebildeten Zuges angepasst werden, indem statt der individuellen Verfahrprofile der den Zug bildenden Transportelemente ein gemeinsames Verfahrprofil des Zuges in einer Speichereinheit der Steuer- und/oder Regeleinheit gespeichert wird. Dadurch kann der gebildete Zug effizienter und/oder mit einer größeren Kraft bewegt werden, als es bei individuellem Bewegen separater Transportelemente möglich ist.

Die zuvor genannte Aufgabe wird auch durch ein Transportelement zum Transport mindestens eines Behälters entlang einer Transportbahn gelöst, welches umfasst:
mindestens ein Lagerelement, welches derart ausgebildet ist, dass das Transportelement bewegbar an der Transportbahn gelagert werden kann,
eine Haltevorrichtung zum Halten eines oder mehrerer Behälter,
ein Reaktionselement, welches mindestens einen Permanentmagneten und/oder mindestens einen Elektromagneten aufweist, wobei das Reaktionselement derart ausgebildet ist, dass das Transportelement durch magnetische Wechselwirkung mit der Transportbahn entlang der Transportbahn bewegt werden kann, und
ein erstes Kopplungselement, welches derart ausgebildet ist, dass das Transportelement mittels des ersten Kopplungselements an ein erstes weiteres Transportelement gekoppelt werden kann.

Dieselben Variationen und Ausführungsformen, welche oben im Zusammenhang mit dem erfindungsgemäßen Verfahren für die genannten Elemente des Transportelementes beschrieben wurden, können auch bei dem erfindungsgemäßen Transportelement Anwendung finden. Insbesondere kann das Transportelement vermöge des mindestens einen Lagerelements bewegbar an der Transportbahn gelagert sein. Dabei kann das Transportelement vollmagnetisch oder teilweise magnetisch und teilweise mechanisch oder vollmechanisch an der Transportbahn gelagert sein. Bei vollmagnetischer Lagerung ist zumindest ein Teil der Transportbahn als Magnetschwebebahn ausgebildet, wobei elektrische Wicklungen in der Transportbahn und/oder dem Transportelement vorgesehen sind, welche eine magnetische Levitation des Transportelements über der Transportbahn bewirken. insbesondere können mindestens ein Permanentmagnet und/oder mindestens ein Elektromagnet des Reaktionselements der magnetischen Levitation des Transportelementes dienen. Durch vollmagnetische Lagerung lässt sich die Reibung zwischen dem Transportelement und der Transportbahn auf ein Minimum reduzieren. Bei teilweise magnetischer und teilweise mechanischer Lagerung kann das Transportelement zusätzlich ein oder mehrere Stützelemente, z. B. in Form von Stützrollen und/oder Führungsrollen aufweisen. Die zusätzlichen Stützelemente rollen oder gleiten dabei auf einer Lauffläche der Transportbahn. Bei vollmechanischer Lagerung kann das Transportelement ausschließlich durch das beschriebene mindestens eine Stützelement gelagert sein. Ergänzend oder alternativ hierzu kann eine Lagerung auch pneumatisch erfolgen, wobei die Transportbahn in dem entsprechenden Teilstück als Luftschwebebahn ausgeführt ist. Bei pneumatischer Lagerung ergibt sich wie auch bei vollständig magnetischer Lagerung eine Minimierung der Reibung zwischen dem Transportelement und der Transportbahn.

Die Haltevorrichtung zum Halten eines oder mehrerer Behälter kann wie oben beschrieben z. B. als Greifelement ausgeführt sein. Das Reaktionselement des Transportelements kann wie bereits beschrieben mindestens einen Permanentmagneten und/oder mindestens einen Elektromagneten aufweisen. Dabei kann wie oben beschrieben durch individuelles Ansteuern von elektrischen Wicklungen der Transportbahn und/oder des mindestens einen Elektromagneten des Reaktionselements eine beschleunigte, abgebremste oder konstante Bewegung des Transportelements entlang der Transportbahn erreicht werden. Je nach Ausführung können der oder die Magnete des Reaktionselements, welche über die magnetische Wechselwirkung mit der Transportbahn zum gesteuerten Bewegen des Transportelements dienen, auch zumindest teilweise zu einer magnetischen Lagerung des Transportelements an der Transportbahn beitragen.

Das erste Kopplungselement kann derart ausgebildet sein, dass das Transportelement mittels des ersten Kopplungselements an ein komplementäres Kopplungselement eines weiteren Transportelements gekoppelt werden kann. Z. B. kann das erste Kopplungselement als sog. aktives Kopplungselement ausgeführt sein, welches beim Koppeln geschaltet, d. h. bewegt oder aktiviert wird, während das komplementäre Kopplungselement des weiteren Transportelements als passives Kopplungselement ausgeführt sein kann, welches beim Koppeln weder bewegt noch aktiviert werden muss. Alternativ kann das erste Kopplungselement als passives Kopplungselement ausgebildet sein, welches an ein aktives Kopplungselement des weiteren Transportelements gekoppelt werden kann. Aktive Kopplungselemente wie Haken, Schlaufen oder ähnliche und passive Kopplungselemente wie Ösen, Stifte oder ähnliche sind im Stand der Technik bekannt und werden daher hier nicht weiter ausgeführt.

Gemäß einer Weiterbildung kann das Transportelement weiterhin ein zweites Kopplungselement umfassen, welches derart ausgebildet ist, dass das Transportelement mittels des zweiten Kopplungselements an ein zweites weiteres Transportelement gekoppelt werden kann. Dabei kann das zweite Kopplungselement als aktives oder passives Kopplungselement ausgeführt sein. Mittels des ersten und des zweiten Kopplungselements kann das Transportelement somit beidseitig jeweils an ein weiteres Transportelement gekoppelt werden, sodass ein sog. Zug aus drei Transportelementen gebildet werden kann. Durch Anordnen jeweils eines ersten und zweiten Kopplungselements als komplementäre Kopplungselemente an den Transportelementen sowie entsprechende Orientierung der Transportelemente entlang der Transportbahn können Züge aus einer beliebigen Anzahl von Transportelementen gebildet werden.

Gemäß einer weiteren Weiterbildung kann das erste und/oder Kopplungselement ein schaltbares mechanisches Kopplungselement umfassen. Das schaltbare mechanische Kopplungselement kann beispielsweise von einer zentralen Steuer- und/oder Regeleinheit geschaltet werden, um das Transportelement an ein weiteres Transportelement zu koppeln. Die Steuer- und/oder Regeleinheit, welche das mechanische Kopplungselement schaltet, kann jedoch auch an dem Transportelement angeordnet sein. Das schaltbare mechanische Kopplungselement kann jedoch auch mittels eines schaltbaren Nockens durch relatives Bewegen des Transportelements zur Transportbahn, so wie oben beschrieben, geschaltet werden. Ebenso kann eine bestehende Kopplung zweier Transportelemente durch Schalten des schaltbaren mechanischen Kopplungselements aufgelöst werden.

Gemäß einer Weiterbildung kann das erste und/oder zweite Kopplungselement einen Permanentmagneten und/oder einen Elektromagneten aufweisen, wobei der Permanentmagnet drehbar an dem Transportelement gelagert ist, und wobei der Elektromagnet mittels einer elektrischen Schaltung des Transportelements umgepolt werden kann. Wie bereits oben beschrieben kann der Permanentmagnet dabei drehbar um eine Achse, welche senkrecht zu der Bewegungsrichtung des Transportelements ist, an dem Transportelement gelagert sein. Der Elektromagnet kann mittels einer elektrischen Schaltung des Transportelements von einer Steuer- und/oder Regeleinheit der Transporteinrichtung oder des Transportelements umgepolt werden. Durch Umorientieren des Permanentmagneten mittels einer Drehung des Permanentmagneten um die Drehachse oder durch Umpolen des Elektromagneten kann wie oben beschrieben eine Abstoßungswechselwirkung zwischen dem Reaktionselement des Transportelements und dem Reaktionselement eines weiteren, unmittelbar benachbarten Transportelements in eine Anziehungswechselwirkung verwandelt werden. Dadurch werden die beiden Transportelemente über die magnetische Anziehung der Permanent- bzw. Elektromagnete ihrer Kopplungselemente aneinander gekoppelt. Eine eventuelle weiterbestehende Abstoßungswechselwirkung der Reaktionselemente wird dabei durch die Anziehung der Kopplungselemente überkompensiert, sodass eine dauerhafte Kopplung der beiden Transportelemente entsteht. Durch erneutes Umorientieren des Permanentmagneten des Transportelements bzw. Umpolen des Elektromagneten des Transportelements kann diese magnetische Kopplung wieder aufgehoben werden.

In einer weiteren Weiterbildung können der Permanentmagnet und/oder der Elektromagnet als Teil des Reaktionselements ausgebildet sein. Somit kann insbesondere das erste und/oder zweite Kopplungselement als Teil des Reaktionselements ausgebildet sein. In einer speziellen Weiterbildung können insbesondere der Permanentmagnet und/oder der Elektromagnet, welche zur magnetischen Kopplung dienen, ebenso zur magnetischen Wechselwirkung mit oder zur magnetischen Lagerung an der Transportbahn verwendet werden. Alternativ dazu können separate Magnete oder Magnetgruppen des Reaktionselements der magnetischen Kopplung, der magnetischen Wechselwirkung bzw. der magnetischen Lagerung dienen.

Gemäß einer weiteren Weiterbildung kann der Permanentmagnet mittels eines schaltbaren Nockens umorientiert werden. Wie bereits zuvor beschrieben kann dieser schaltbare Nocken an einer vorbestimmten Position entlang der Transportbahn oder an dem Transportelement angeordnet sein. Entsprechend kann ein in den schaltbaren Nocken greifender Bügel an dem Transportelement bzw. an der Transportbahn angeordnet sein. Nach Schalten des Nockens, z. B. durch eine Steuer- und/oder Regeleinheit der Transporteinrichtung, wird der Permanentmagnet durch Bewegen des Transportelements entlang der Transportbahn umorientiert, sodass sich zuvor abstoßende Magnete der Kopplungselemente zweier benachbarter Transportelemente nunmehr anziehen.

In einer alternativen Weiterbildung kann der Permanentmagnet mittels magnetischer Wechselwirkung mit dem ersten weiteren Transportelement umorientiert werden. Wie zuvor beschrieben führt die zunehmende Abstoßungswechselwirkung bei Annäherung des Transportelements an das erste weitere Transportelement zu einem Drehmoment auf den drehbar gelagerten Permanentmagnet, welches den Permanentmagnet bei weiterer Annäherung derart umorientiert, dass die magnetische Anziehungswechselwirkung zwischen dem Permanentmagnet und dem komplementären Magneten des ersten weiteren Transportelements maximiert wird. Somit kann ein Umorientieren des Permanentmagneten des Transportelements und somit eine magnetische Kopplung des Transportelements an das erste weitere Transportelement bei frei drehbarer Lagerung des Permanentmagneten bereits durch die Annäherung des Transportelements an das erste weitere Transportelement automatisch erfolgen.

Gemäß einer weiteren Weiterbildung kann das Transportelement weiterhin eine federgespannte Arretierungsvorrichtung zum Arretieren des Permanentmagneten umfassen, welche derart ausgebildet ist, dass sie bei Überschreiten eines ersten vorgegebenen Schwellwertes der magnetischen Abstoßungswechselwirkung mit dem ersten weiteren Transportelement automatisch auslöst. Eine solche federgespannte Arretierungsvorrichtung zum Arretieren des Permanentmagneten kann beispielsweise durch einen federgespannten Bolzen realisiert werden, welcher in eine Aussparung einer drehbaren Scheibe greift, auf welcher der Permanentmagnet angeordnet ist. Dabei wird bei Überschreiten des ersten vorgegebenen Schwellwertes der magnetischen Abstoßungswechselwirkung mit dem ersten weiteren Transportelement die den Bolzen spannende Feder soweit zusammengedrückt, dass die Arretierungsvorrichtung automatisch auslöst. Nach Auslösen der Arretierungsvorrichtung wird dann die Drehscheibe mit dem Permanentmagnet durch die magnetische Wechselwirkung mit dem ersten weiteren Transportelement automatisch umorientiert. Dabei kann der erste vorgegebene Schwellwert der magnetischen Abstoßungswechselwirkung derart gewählt werden, dass er dem Abstand zweier benachbarter Transportelemente, bei dem eine magnetische Kopplung erfolgen soll, entspricht. Bei Annähern zweier Transportelemente mittels individueller Steuerung der Transportelemente, also durch Anpassen ihrer jeweiligen Verfahrprofile, auf diesen Abstand kann somit ohne zusätzliche Schalt- und/oder Steuervorgänge eine automatische magnetische Kopplung der beiden Transportelemente erfolgen.

Gemäß einer weiteren Weiterbildung kann das Transportelement weiterhin eine Rückstellvorrichtung umfassen, welche derart ausgebildet ist, dass sie den Permanentmagneten bei Unterschreiten eines zweiten vorgegebenen Schwellwertes der magnetischen Anziehungswechselwirkung in eine ursprüngliche Orientierung zurückdreht. Die Rückstellvorrichtung kann dabei derart ausgebildet sein, dass ein Umorientieren des Permanentmagneten beim magnetischen Koppeln gegen die Rückstellvorrichtung erfolgt. Eine Reihe von Rückstellvorrichtungen ist im Stand der Technik bekannt. Z. B. kann eine Spiralfeder als Rückstellvorrichtung für die zuvor beschriebene Drehscheibe fungieren. Wird die magnetische Kopplung zwischen den benachbarten Transportelementen getrennt, z. B. indem der Abstand zwischen den Transportelementen durch individuelles Steuern vergrößert wird, so nimmt die magnetische Anziehungswechselwirkung zusehends ab, bis sie den zweiten vorgegebenen Schwellwert unterschreitet. Die Rückstellvorrichtung kann dabei derart ausgebildet sein, dass eine magnetische Anziehungswechselwirkung unterhalb des zweiten vorgegebenen Schwellwertes ein Zurückdrehen des Permanentmagneten in die ursprüngliche Orientierung durch die Rückstellvorrichtung nicht mehr verhindern kann. Durch Anbringen einer weiteren Arretierungsvorrichtung, welche bei Unterschreiten des zweiten vorgegebenen Schwellwertes automatisch auslöst, kann dieses Zurückdrehen in die ursprüngliche Orientierung sprunghaft bei Unterschreiten des zweiten vorgegebenen Schwellwertes geschehen. Die ursprüngliche Orientierung kann hierbei der Orientierung des Permanentmagneten vor der magnetischen Kopplung, insbesondere vor dem Umorientieren des Permanentmagneten bei Annäherung der Transportelemente, entsprechen.

Die vorliegende Erfindung stellt auch eine Transporteinrichtung gemäß Anspruch 5 zur Verfügung.

Die gleichen Variationen und Ausführungsformen, welche bisher im Zusammenhang mit den erfindungsgemäßen Verfahren, insbesondere in Bezug auf die Transportbahn und die Transportelemente, beschrieben wurden, können auch auf die erfindungsgemäße Transporteinrichtung zum Transport von Behältern in einer Behälterbehandlungsanlage angewendet werden.

Insbesondere kann die Steuer- und/oder Regeleinheit eine Speichereinheit aufweisen, in welcher vorgegebene Verfahrprofile für eine Vielzahl von Transportelementen in Abhängigkeit von zu behandelnden Behältern und/oder Produkten in Form einer Sortenverwaltung abgelegt sein können. Anhand der vorgegebenen Verfahrprofile und den, beispielsweise als Teil einer Initialisierungsroutine der Transporteinrichtung und/oder mittels einer Vielzahl der oben beschriebenen, entlang der Transportbahn angeordneten Sensoren, ermittelten Positionen der Transportelemente, kann die Steuer- und/oder Regeleinheit die Vielzahl von Transportelementen, zu welcher das mindestens eine Transportelement zählt, mit einem gewünschten Weg-Zeit-Profil und einer gewünschten Teilung des gebildeten Stroms an Transportelementen entlang zumindest des Teils der Transportbahn bewegen. Dazu können die Transportbahn wie oben beschrieben Wechselwirkungselemente und die Transportelemente Reaktionselemente aufweisen, welche individuell von der Steuer- und/oder Regeleinheit angesteuert werden können. Dadurch können die Transportelemente einzeln steuerbar entlang des Teils der Transportbahn geführt werden.

Der Teil der Transportbahn umfasst dabei mindestens eine Prozessstrecke und eine Bypasstrecke. An der Prozessstrecke ist dabei mindestens eine erste Behälterbehandlungseinheit zum Durchführen eines ersten Prozessschrittes an den von den Transportelementen transportierten Behältern vorgesehen. Zusätzlich können weitere Behälterbehandlungseinheiten, insbesondere in Reihe, entlang der Prozessstrecke angeordnet sein, welche dazu ausgebildet sind, aufeinander folgende Prozessschritte zur Behandlung der Behälter durchzuführen. Insbesondere kann die Prozessstrecke einen Zuförderer, beispielsweise in Form eines Einlaufsterns, über eine Vielzahl von Behälterbehandlungseinheiten mit einem Abförderer, beispielsweise in Form eines Auslaufsterns, verbinden. Die Bypassstrecke ist dabei derart ausgebildet, dass sie eine Umgehung zumindest der ersten Behälterbehandlungseinheit bildet. Dazu kann die Bypassstrecke stromaufwärts und stromabwärts von der ersten Behälterbehandlungseinheit jeweils über vorzugsweise schaltbare Weichen mit der Prozessstrecke verbunden sein. Dabei kann die Bypassstrecke derart ausgedehnt sein, dass sie eine Umgehung für zwei oder mehr Behälterbehandlungseinheiten bildet. Insbesondere kann die Bypassstrecke jeweils stromaufwärts und stromabwärts von mehreren Behälterbehandlungseinheiten über vorzugsweise schaltbare Weichen mit der Prozessstrecke verbunden sein, so dass sowohl individuelles Umfahren einzelner Behandlungseinheiten als auch Umfahren von Gruppen von Behandlungseinheiten ermöglicht wird. Die schaltbaren Weichen lassen sich dabei mittels der Steuer- und/oder Regeleinheit entsprechend dem jeweiligen Verfahrprofil der Transportelemente schalten. Die Verfahrprofile der Transportelemente werden erfindungsgemäß in Abhängigkeit von einem Betriebszustand der Behandlungseinheiten flexibel von der Steuer- und/oder Regeleinheit angepasst.

Dadurch lässt sich ein flexibles Vorbeileiten eines oder mehrerer Transportelemente an einer oder mehreren Behandlungseinheiten, z. B. bei Ausfall einer Behandlungseinheit, realisieren.

Gemäß einer Weiterbildung kann die Transporteinrichtung weiterhin eine Pufferstrecke umfassen, welche derart mit der Prozessstrecke und/oder der Bypassstrecke verbunden ist, dass das Transportelement zumindest zeitweise an der Pufferstrecke gespeichert werden kann. Die Pufferstrecke kann somit also ebenfalls zu dem Teil der Transportbahn gehören, entlang welchem das Transportelement einzeln steuerbar geführt werden kann. Die Pufferstrecke kann über eine vorzugsweise schaltbare Weiche mit der Prozessstrecke und/oder der Bypasstrecke verbunden sein. Die Pufferstrecke kann als Sackgasse ausgebildet sein, aus welcher die gepufferten Transportelemente, beispielsweise nach Wiederanfahren einer ausgefallenen Behälterbehandlungseinheit, nach dem First In - Last Out Prinzip zurück zur Prozessstrecke und/oder Bypasstrecke geleitet werden können. Die Pufferstrecke kann alternativ aber auch als Schleife ausgebildet sein, welche über vorzugsweise schaltbare Weichen an zwei Stellen mit der Prozessstrecke und/oder der Bypassstrecke verbunden ist. In diesem Fall werden entlang der Pufferstrecke gespeicherte Transportelemente nach dem First In - First Out Prinzip zur Prozessstrecke und/oder zur Bypassstrecke zurück geleitet. Das Zurückleiten kann dabei in einem Reversierbetrieb der Bypassstrecke erfolgen, während gleichzeitig regulär behandelte Behälter in die ursprüngliche Richtung entlang der Prozessstrecke geführt werden.

Dabei kann die Steuer- und/oder Regeleinheit wie bereits oben beschrieben derart ausgebildet sein, dass sie das Verfahrprofil mindestens eines zu puffernden Transportelements derart anpasst, dass das Transportelement aus der Prozessstrecke auf die Pufferstrecke ausgeschleust und auf dieser angehalten wird. Die Dauer des Pufferns kann dabei von der Steuer- und/oder Regeleinheit vorgegeben werden oder bis zum Empfang eines Freigabesignals von einer die Pufferung verursachenden Behälterbehandlungseinheit flexibel ausgedehnt werden. Dabei kann eine Pufferung wie oben beschrieben insbesondere durch Abweichen eines aktuellen Betriebszustandes einer Behälterbehandlungseinheit von einem vorgegebenen Sollbetriebszustand der Behälterbehandlungseinheit, beispielsweise aufgrund eines reduzierten Durchsatzes an Behältern oder eines Totalausfalls der Behandlungseinheit, erforderlich werden. Durch Puffern von Transportelementen entlang der Pufferstrecke können vorübergehende Ausfälle einer Behandlungseinheit und Schwankungen im Durchsatz an Behältern ausgeglichen werden. Es versteht sich, dass die Transporteinrichtung mehrerer Pufferstrecken, insbesondere je mindestens eine Pufferstrecke pro Behälterbehandlungseinheit, umfassen kann.

Die Pufferstrecke kann jedoch auch als Teil der Bypasstrecke ausgebildet sein. Dadurch können stromaufwärts von der die Pufferung verursachenden Behälterbehandlungseinheit liegende Behälterbehandlungseinheiten bis zum Erschöpfen der Pufferkapazität der Bypassstrecke weiterlaufen, um einen Verlust an Produktionszeit zu reduzieren. Falls einer oder einige der nachfolgenden Prozessschritte wie oben beschrieben unabhängig von dem Prozessschritt der ausgefallenen Behandlungseinheit durchgeführt werden können, kann die Bypassstrecke auch dazu verwendet werden, die Transportelemente erst zur Durchführung dieser Prozessschritte den entsprechenden Behandlungseinheiten zuzuführen, um sie anschließend nach Wiederanfahren der ausgefallenen Behandlungseinheit dieser erneut zuzuführen. Durch Verwendung zumindest eines Teils der Bypassstrecke als Pufferstrecke kann die Baugröße der gesamten Transporteinrichtung erheblich reduziert werden, da keine separaten Pufferstrecken zur Verfügung gestellt werden müssen. Mittels einer an entsprechenden Stellen mit der Prozessstrecke verbundenen Bypassstrecke lässt sich zudem eine flexible Abfolge der Prozessschritte einer Prozesslinie realisieren. Dadurch können nicht nur Produktionsverluste vermieden, sondern auch flexibel unterschiedliche Behälter und/oder Produkte behandelt werden, ohne die Transporteinrichtung umbauen zu müssen.

Gemäß einer weiteren Weiterbildung können die Bypassstrecke und/oder die Pufferstrecke derart ausgebildet sein, dass das Transportelement in beide Richtungen geführt werden kann. Dies kann beispielsweise mittels der oben beschriebenen Wechselwirkungselemente und Reaktionselemente realisiert werden, wobei die Wechselwirkungselemente und/oder Reaktionselemente je nach Verfahrrichtung unterschiedlich angesteuert werden. Entsprechende Verfahrprofile können in einer Speichereinheit der Steuer- und/oder Regeleinheit abgelegt sein. Ein Betreiben einer Pufferstrecke in die Gegenrichtung kann beispielsweise zum Entleeren der Pufferstrecke und Wiedereinführen der gepufferten Transportelemente in die Prozessstrecke benötigt werden. Ein Betreiben der Bypassstrecke in die Gegenrichtung, also im Reversierbetrieb, kann dem Rückführen von bzgl. eines bestimmten Prozessschrittes noch unbehandelten Behältern zu einer entsprechenden Behälterbehandlungseinheit dienen.

Gemäß einer Weiterbildung kann die Transporteinrichtung weiterhin eine Prüfeinheit umfassen, welche dazu ausgebildet ist, einen Behandlungszustand eines von dem Transportelement mitgeführten Behälters zu bestimmen. Dabei ist die Prüfeinheit vorzugsweise stromaufwärts von der ersten Behälterbehandlungseinheit angeordnet. Es versteht sich, dass je Behälterbehandlungseinheit eine entsprechende Prüfeinheit stromaufwärts von der jeweiligen Behälterbehandlungseinheit angeordnet sein kann. Wie oben beschrieben kann eine solche Prüfeinheit beispielsweise in Form einer Lichtschranke, z.B. zum Prüfen eines Füllstandes eines Behälters ausgebildet sein. Ebenso kann die Prüfeinheit eine Messvorrichtung zum Bestimmen des Gewichts eines mitgeführten Behälters umfassen, wodurch sowohl Füllstand als auch grobe Beschädigungen detektiert werden können. Weiterhin ist eine optische Kontrolleinheit, beispielsweise als optischer Scanner oder Kamera mit nachgeschalteter Bildverarbeitung denkbar, um z.B. Beschädigungen des Behälters oder aufgebrachter Etiketten oder Fehler aufgedruckter Druckbilder zu detektieren. Eine Vielzahl weiterer Prüfeinheiten sind im Stand der Technik bekannt.

Der Behandlungszustand des mitgeführten Behälters kann dabei während des Passierens des Transportelements an der Prüfeinheit bestimmt werden und darüber hinaus via Kabelverbindung oder kabellos als codiertes Signal an die Steuer- und/oder Regeleinheit übertragen werden. Insbesondere kann auf diesem Wege jeder Behälter, welcher der Behandlungseinheit zur Behandlung im Zulauf zugeführt wird, vor Erreichen der Behandlungseinheit derart getestet werden, dass der durchzuführende Prozessschritt in der Behandlungseinheit erfolgreich durchgeführt werden kann. Insbesondere können fehlerhafte Behälter rechtzeitig erkannt und entsprechend behandelt werden. Eine entsprechende Behandlung kann wie oben beschrieben darin bestehen, dass die Steuer- und/oder Regeleinheit bei Empfang eines entsprechenden Signals von der Prüfeinheit das vorgegebene Verfahrprofil des Transportelements in Abhängigkeit von dem bestimmten Behandlungszustand anpasst. So können beispielsweise als fehlerhaft erkannte Behälter von dem jeweiligen Transportelement entladen und/oder über eine stromabwärts von der Prüfeinheit, aber stromaufwärts von der Behälterbehandlungseinheit mit der Prozessstrecke verbundene Nebenstrecke mitsamt des jeweiligen Transportelements ausgeschleust werden. Hierbei kann auch ein Teil der Bypasstrecke als Nebenstrecke fungieren, wobei ein geeigneter Abförderer zum Entladen des fehlerhaften Behälters an der Nebenstrecke angeordnet sein kann. Zudem kann die Nebenstrecke über eine Rückführstrecke mit dem Beginn der Prozessstrecke verbunden sein, um entladene Transportelemente wieder in den Strom der Transportelemente einzufügen.

Die vorliegende Erfindung erlaubt somit, einen Verlust an Produktionszeit bei Ausfall einer Behälterbehandlungseinheit in einer Prozesslinie durch automatisches Anpassen der Verfahrprofile von einzeln steuerbaren Transportelementen weitgehend zu vermeiden. Zudem können fehlerhafte Behälter automatisch erkannt und separat von den regulär behandelten Behältern ausgeschleust oder innerhalb der Teilung des Stroms mitgeführt werden. Durch Koppeln mehrerer Transportelemente zu einem Zug mit einem gemeinsamen Verfahrprofil lässt sich eine minimale Teilung und ein hoher Durchsatz an Behältern realisieren. Zudem kann die Baugröße der Transporteinrichtung durch Verwendung der Bypassstrecke als Pufferstrecke reduziert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im weiteren beschriebenen Merkmale auch auf andere Weise miteinander kombiniert werden können.
Figur 1 stellt eine Prinzipskizze für das Reduzieren des Abstandes zweier benachbarter Transportelemente nach dem Ausschleusen eines Transportelements dar.
Figur 2 stellt eine Prinzipskizze für das Zusammenfahren dreier benachbarter Transportelemente nach Abgabe eines fehlerhaften Behälters von dem mittleren Transportelement dar.
Figur 3 stellt eine beispielhafte Ausführung zweiter Transportelemente und der Wechselwirkungselemente der Transportbahn dar.
Figur 4 stellt eine Prinzipskizze für das magnetische Koppeln zweier Transportelemente durch Umorientieren bzw. Umpolen von Magneten dar.
Figur 5 stellt eine Prinzipskizze für ein Beispiel für das mechanische Koppeln von Transportelementen dar.
Figur 6 stellt eine detaillierte Ausführungsform der Reaktionselemente und Kopplungselemente für das magnetische Koppeln von Transportelementen dar.
Figur 7 stellt skizzenhaft das automatische Umorientieren eines drehbar gelagerten Permanentmagneten sowie eine Arretierungs- und eine Rückstellvorrichtung für den drehbar gelagerten Permanentmagneten dar.
Figur 8 stellt eine Prinzipskizze für eine Transporteinrichtung für individuell steuerbarer Transportelemente mit einer Bypassstrecke und zwei Pufferstrecken gemäß der vorliegenden Erfindung dar.

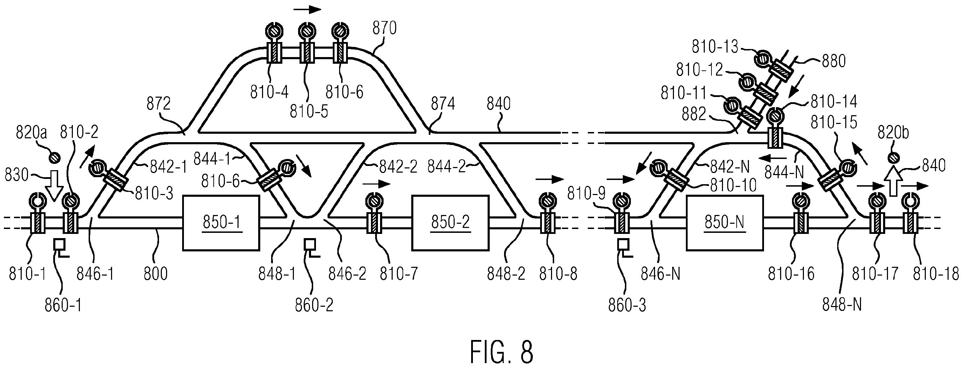

In Figur 8 ist eine Prinzipskizze für eine exemplarische Ausführung einer Transporteinrichtung mit einer Bypassstrecke und mindestens einer Pufferstrecke gemäß der vorliegenden Erfindung dar. Eine Vielzahl einzeln steuerbarer Transportelemente, von denen hier exemplarisch einzelne Transportelemente 810-1 bis 810-18 mit exemplarischen Verfahrprofilen zu einem bestimmten Zeitpunkt dargestellt sind, werden mittels einer Steuer- und/oder Regeleinheit der Transporteinrichtung (nicht dargestellt) entlang der Transportbahn bewegt. Dabei werden die Transportelemente durch individuelles Ansteuern der Wechselwirkungselemente der Transportbahn und/oder der Reaktionselemente der Transportelemente entlang individueller Wege mit individuelle vorgegebenen Geschwindigkeiten, d. h. gemäß individueller Verfahrprofile, bewegt.

Die hier in einer exemplarischen Ausführung dargestellte Transportbahn verfügt neben einer Prozessstrecke 800 über eine gemeinsame Bypassstrecke 840 aller Behälterbehandlungseinheiten 850-1 bis 850-N der Prozesslinie, sowie über mindestens eine erste Pufferstrecke 870 und eine zweite Pufferstrecke 880. Die Prozessstrecke 800 verbindet eine Aufnahmestelle 830 über eine Vielzahl von Behälterbehandlungseinheiten 850-1 bis 850-N, die hier beispielhaft in Serie angeordnet sind, mit einer Abgabestelle 840. Ein unbeladenes Transportelement 810-1 nimmt an der Aufnahmestelle 830 einen Behälter 820a auf. Anschließend werden die Behälter 820a mittels der beladenen Transportelemente 810-2, 810-7, 810-8, 810-9, 810-16 und 810-17 entlang der von den Behälterbehandlungseinheiten 850-1 bis 850-N gebildeten Prozessstrecke transportiert, wo sie im Normalfall von den Behälterbehandlungseinheiten einer Reihe von aufeinander folgenden Prozessschritten zur Behandlung der Behälter unterzogen werden. Die Pfeile über den Transportelementen deuten deren Bewegungsrichtungen an. Von der letzten Behälterbehandlungseinheit 850-N der Prozessstrecke transportiert das Transportelement 810-17 den Behälter zu der Abgabestelle 840, wo der nunmehr behandelte Behälter 820b an einen Ablaufförderer abgegeben wird. Anschließend ist das Transportelement 810-18 wieder unbeladen und kann zur Aufnahmestelle rückgeführt werden (hier nicht dargestellt).

Im Normalbetrieb, d. h. wenn die Betriebszustände aller Behälterbehandlungseinheiten 850-1 bis 850-N den jeweiligen Sollbetriebszuständen entsprechen, sind die Verfahrprofile der die Behälter transportierenden Transportelemente von der Steuer- und/oder Regeleinheit im Allgemeinen derart vorgegeben, dass die Transportelemente entlang der Prozessstrecke 800 geführt werden, ohne auf die Bypassstrecke 840 oder eine der Pufferstrecken 870 bzw. 880 ausgeleitet zu werden. Die dargestellte Konfiguration der Verfahrprofile zeigt jedoch eine Situation, in welcher die erste Behälterbehandlungseinheit 850-1 z. B. aufgrund eines technischen Defekts ausgefallen ist. Ein entsprechendes Abweichen des Betriebszustands der Behandlungseinheit 850-1 vom vorgegebenen Sollbetriebszustand wurde an die Steuer- und/oder Regeleinheit übermittelt. Als Konsequenz wurden die Verfahrprofile der Transportelemente 810-3 und 810-6 von der Steuer- und/oder Regeleinheit automatisch derart angepasst, dass sie die Behandlungseinheit 850-1 auf einem Teil der Bypassstrecke 840 umfahren. Dazu werden die Transportelemente stromaufwärts von der Behandlungseinheit 850-1 mittels einer schaltbaren Weiche 846-1 aus der Prozessstrecke 800 ausgeschleust und über eine Ausleitungsstrecke 842-1 dem gemeinsamen Teil der Bypassstrecke zugeführt. Anschließend werden die Transportelemente über eine Einleitungsstrecke 844-1 und eine schaltbare Weiche 848-1 der Prozessstrecke wieder zugeführt, von wo aus sie an die zweite Behälterbehandlungseinheit 850-2 weitergeleitet werden. Somit kann durch Anpassen der Verfahrprofile der Transportelemente 810-3 und 810-6, inklusive Schalten der jeweiligen Weichen 846-1 und 848-1 auf einfache Weise eine Umgehung der ausgefallenen Behälterbehandlungseinheit 850-1 gebildet werden.

Alternativ oder ergänzend können zumindest einige Transportelemente 810-4, 810-5 und 810-6 auf eine erste Pufferstrecke 870 ausgeleitet werden. Die hier exemplarisch dargestellte Pufferstrecke 870 ist in Form einer Schleife über schaltbare Weichen 872 und 874 mit der Bypassstrecke 840 verbunden. Die Verfahrprofile der Transportelemente 810-4, 810-5 und 810-6 können von der Steuer- und/oder Regeleinheit derart angepasst werden, dass die Transportelemente auf der Pufferstrecke 870 angehalten und dort für eine vorgegebene Zeit gepuffert werden. Nach Wiederanfahren der ausgefallenen Behandlungseinheit 850-1 können die gepufferten Transportelemente entweder über die Weiche 872 oder die Weiche 874 zur Bypassstrecke 840 zurück geführt werden. Von dort können sie im Reversierbetrieb der Bypassstrecke 840 über die Ausleitungsstrecke 842-1 und die Weiche 846-1 in den Zulauf zu der Behandlungseinheit 850-1 weiter geführt werden, so dass der fehlende Prozessschritt an den mitgeführten Behältern durchgeführt werden kann. Bei Ausbildung der Bypassstrecke 840 und/oder der Pufferstrecken 870 bzw. 880 mit einem Linearantrieb können die Transportelemente entlang der jeweiligen Strecke in beide Richtungen geführt werden. Die entsprechenden Verfahrprofile können von der Steuer- und/oder Regeleinheit automatisch angepasst werden. So kann ein Entleeren der Pufferstrecke 870 und ein Reversierbetrieb der Bypassstrecke 840 beispielsweise durch ein Signal von der Behälterbehandlungseinheit 850-1, welches deren Betriebsbereitschaft signalisiert, eingeleitet werden.

Ein solcher Reversierbetrieb der Bypassstrecke 840 ist exemplarisch im rechten Teil der Figur dargestellt. Hier wurden die Transportelemente 810-11, 810-12 und 810-13 zu einem Zeitpunkt, zu welchem die Behälterbehandlungseinheit 850-N stillstand, entlang der Pufferstrecke 880 gepuffert. Die hier exemplarisch dargestellt Pufferstrecke 880 ist als Sackgasse ausgebildet und über eine schaltbare Weiche 882 mit der Bypassstrecke 840 verbunden. Eine als Sackgasse ausgebildete Pufferstrecke muss dabei notwendigerweise in beide Richtungen betrieben werden können. Nach Wiederanfahren der Behandlungseinheit 850-N wird die Bypassstrecke 840 im Bereich der Behandlungseinheit 850-N durch Anpassen der Verfahrprofile der Transportelemente 810-10, 810-14 und 810-15 im Reversierbetrieb betrieben. Hier ist anzumerken, dass der Reversierbetrieb wie oben beschrieben durch geeignetes Ansteuern der Wechselwirkungselemente der Bypassstrecke und/oder der Reaktionselemente der Transportelemente realisiert werden kann. Dabei kann insbesondere ein Teil der Bypassstrecke im Reversierbetrieb betrieben werden, während ein anderer Teil der Bypassstrecke im regulären Betrieb weiterbetrieben wird.

Die Transportelemente 810-10, 810-14 und 810-15 werden somit durch Anpassen ihrer Verfahrprofile zu dem Zulauf zur Behandlungseinheit 850-N zurück geführt, um der noch fehlenden Behandlung unterworfen zu werden. Zudem werden die Verfahrprofile der entlang der Pufferstrecke 880 gepufferten Transportelemente 810-11, 810-12 und 810-13 ebenfalls derart angepasst, dass sie in den Strom der zurück geführten Transportelemente 810-10, 810-14 und 810-15 über die Weiche 882 eingefügt werden. Durch das Puffern von unvollständig behandelten Behältern entlang der Pufferstrecke 880 kann somit ein vorübergehender Ausfall der Behälterbehandlungseinheit 850-N kompensiert werden.

Die hier exemplarisch dargestellte Bypassstrecke 840 weist neben einem gemeinsamen, parallel zur Prozessstrecke 800 verlaufenden Teil, separate Umgehungen für jede einzelne Behälterbehandlungseinheit 850-1 bis 850-N auf. Die Umgehungen umfassen dabei jeweils eine Ausleitungsstrecke 842-1 bis 842-N, welche über eine schaltbare Weiche 846-1 bis 846-N mit der Prozessstrecke 800 verbunden ist, sowie eine Einleitungsstrecke 844-1 bis 844-N, welche über eine schaltbare Weiche 848-1 bis 848-N mit der Prozessstrecke 800 verbunden ist. Die hier dargestellte Konfiguration ist jedoch in keiner Weise einschränkend, da unterschiedlichste Kombinationen von Bypassstrecken und/oder Pufferstrecken gemäß der vorliegenden Erfindung denkbar sind. Je nach Layout lässt sich durch entsprechendes Anpassen der Verfahrprofile der Transportelemente eine flexible Abfolge der von den Behälterbehandlungseinheiten 850-1 bis 850-N durchgeführten Prozessschritte realisieren. Damit kann ein Produktwechsel allein durch Anpassen der Verfahrprofile und ohne aufwändigen Umbau der Transporteinrichtung erfolgen.

Die hier dargestellte Transporteinrichtung weist weiterhin exemplarische Prüfeinheiten 860-1 bis 860-3 auf, welche stromaufwärts von der jeweiligen Behälterbehandlungseinheit 850-1 bis 850-N angeordnet sind. Wie oben beschrieben bestimmt die jeweilige Prüfeinheit beim Passieren des Transportelements einen Behandlungszustand des mitgeführten Behälters, insbesondere in Hinblick auf einen zuletzt durchgeführten Prozessschritt. Unzureichend behandelte Behälter oder fehlerhafte Behälter können durch Anpassen des Verfahrprofils des jeweiligen Transportelements automatisch aus dem Strom der Transportelemente ausgeschleust werden. Auch zu diesem Zweck kann die Bypassstrecke 840 verwendet werden. Beispielsweise kann entlang der Bypassstrecke ein Abförderer (nicht dargestellt) zum Entladen fehlerhafter Behälter angeordnet sein. Außerdem kann die Bypassstrecke 840 selbst auch als Pufferstrecke dienen, wobei eine Pufferung beispielsweise auf den Teilstrecken zwischen den Einleitungsstrecken und den darauffolgenden Ausleitungsstrecken, z. B. zwischen 844-1 und 842-2, erfolgen kann. Auf diese Weise bildet die Bypassstrecke 840 eine multifunktionelle Strecke, welche je nach Verfahrprofil des jeweiligen Transportelements verschiedene Aufgaben erfüllt. Auf diese Weise kann die Baugröße der Transporteinrichtung erheblich reduziert werden.

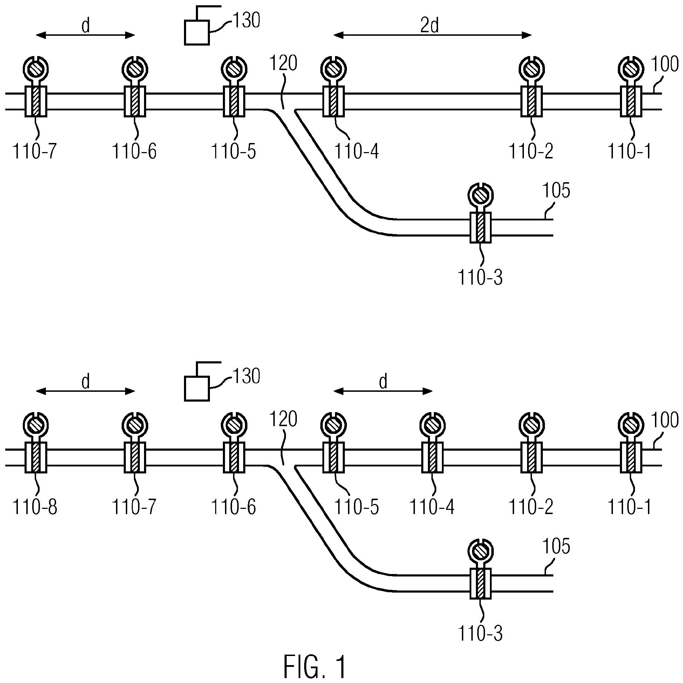

In Figur 1 ist eine Prinzipskizze für das Reduzieren des Abstandes zweier benachbarter Transportelemente nach dem Ausschleusen eines Transportelements dargestellt. Die beiden Teilansichten zeigen einen Teil der Transportbahn ohne Reduzieren des Abstandes (obere Teilansicht) und mit der erfindungsgemäßen Reduzierung des Abstandes (untere Teilansicht). Der dargestellte Teil der Transportbahn besteht in diesem exemplarischen, nicht einschränkenden Beispiel aus einem Hauptzweig 100, entlang dessen ein Produktstrom bzw. ein Strom an Transportelementen 110-1 bis 110-8 zum Transport von Behältern mit einer vorgegebenen Teilung d, d. h. mit einem vorgegebenen Abstand benachbarter Transportelemente, als Teil einer Prozessstrecke, z. B. zwischen zwei Behälterbehandlungseinheiten, fließt, und einem Nebenzweig 105, welcher von dem Hauptzweig 100 mittels einer Weiche 120 abzweigt.

Der Nebenzweig 105 kann dabei dem Ausschleusen von Transportelementen mit fehlerhaften Behältern dienen oder auch einer Teilung des Produktstroms, um z. B. einen nächsten Prozessschritt in parallel angeordneten Behälterbehandlungseinheiten mit höherem Gesamtdurchsatz durchführen zu können. Im Falle des Ausschleusens von Transportelementen mit fehlerhaften Behältern weist die Transportbahn stromaufwärts von der Weiche 120 eine Prüfeinheit 130 auf, welche derart ausgebildet ist, dass sie fehlerhafte Behälter, die mittels der Transportelemente an ihr vorbeigeführt werden, detektieren kann. Eine solche Prüfeinheit 130 kann beispielsweise auf einem optischen, akustischen und/oder mechanischem Verfahren zum Überprüfen eines Behandlungszustandes der vorbeigeführten Behälter basieren. Bei Detektion eines fehlerhaften Behälters sendet die Prüfeinheit 130 ein entsprechendes Signal an eine Steuer- und/oder Regeleinheit der Transporteinrichtung, welche in Reaktion auf den Empfang eines solchen Signals das den fehlerhaften Behälter transportierende Transportelement 110-3 durch Anpassen dessen Verfahrprofils und insbesondere durch Steuern der Weiche 120 aus dem Hauptzweig 100 ausschleust.

Durch Ausschleusen des Transportelements 110-3 entsteht dabei zwischen dem vorausgehenden Transportelement 110-2 und dem nachfolgenden Transportelement 110-4 eine Lücke in Form eines gegenüber der Teilung verdoppelten Abstandes **2d** (siehe obere Teilansicht). Diese Lücke, welche zu Problemen in einer darauffolgenden Behälterbehandlungseinheit führen kann, wird jedoch durch Anpassen der Verfahrprofile der Transportelemente 110-2 und 110-4 wie oben beschrieben geschlossen. In einer speziellen Weiterbildung kann beispielsweise das Transportelement 110-4 vorübergehend von der Steuer- und/oder Regeleinheit der Transporteinrichtung derart beschleunigt werden, dass es gegenüber dem Transportelement 110-2 bis auf die Teilung d aufholt (siehe untere Teilansicht). Um den Abstand zwischen dem aufrückenden Transportelement 110-4 und dessen Nachfolger 110-5 konstant bei der vorgegebenen Teilung zu halten, können von der Steuer- und/oder Regeleinheit alle nachfolgenden Transportelemente 110-5 bis 110-8 ebenso vorübergehend beschleunigt werden, indem auch deren Verfahrprofile angepasst werden. Durch kurzzeitiges Erhöhen eines Durchsatzes der stromaufwärts liegenden Behälterbehandlungseinheit(en) kann die ursprüngliche Lücke im Produktionsstrom auch im Hinblick auf den Gesamtdurchsatz der Behälterbehandlungsanlage pro Zeiteinheit dauerhaft geschlossen werden. Dabei wirkt sich die erzielte zeitliche Verzögerung zwischen dem Zusammenfahren der beiden Transportelemente 110-2 und 110-4 und der Erhöhung des Durchsatzes stromaufwärts liegender Behälterbehandlungseinheiten positiv auf die Flexibilität und Steuerbarkeit der gesamten Behälterbehandlungsanlage aus.

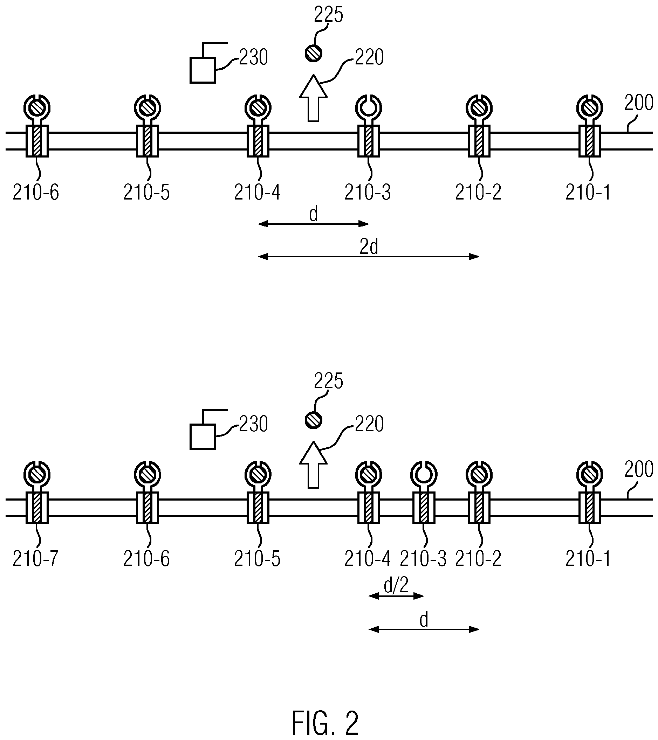

In der Figur 2 ist eine der Figur 1 entsprechende Prinzipskizze für das Zusammenfahren einer entstandenen Lücke dargestellt, wobei die Lücke der Größe 2d in Figur 2 nicht durch Ausschleusen eines Transportelements, sondern durch Entladen eines Transportelements 210-3 von einem oder mehreren fehlerhaften Behältern 225 an einer Abgabestelle 220 erfolgt. In Figur 2 ist dementsprechend nur der Produktstrom als Strom von Transportelementen 210-1 bis 210-7 entlang eines Hauptzweigs 200 der Transportbahn dargestellt. Eine Prüfeinheit 230 an einem Checkpoint der Transportbahn überprüft die vorbeigeführten Behälter und detektiert fehlerhafte Behälter, welche an der Abgabestelle 220 von dem entsprechenden Transportelement 210-3 an einen Abförderer abgegeben werden.

Anders als in dem in Figur 1 dargestellten Verfahren wird jedoch das nunmehr von dem Behälter entladene Transportelement 210-3 weiterhin im Strom der Transportelemente zwischen dem Transportelement 210-2 und 210-4 weiterbewegt. Ohne Reduzieren des Abstandes zwischen den Transportelementen 210-2 und 210-3 bzw. 210-3 und 210-4 betrüge somit der Abstand zwischen zwei benachbarten Transportelementen mit fehlerfreien Behältern im Fall der Transportelemente 210-2 und 210-4 2d, welches der doppelten Teilung entspräche.

Durch das erfindungsgemäße Verfahren des Anpassens der Verfahrprofile der Transportelemente 210-2 bis 210-4 kann der jeweilige Abstand zwischen dem vorausgehenden, beladenen Transportelement 210-2 und dem nachfolgenden, unbeladenen Transportelement 210-3 bzw. zwischen dem vorausgehenden, unbeladenen Transportelement 210-3 und dem nachfolgenden, beladenen Transportelement 210-4 auf die Hälfte d/2 der vorgegebenen Teilung d reduziert werden. Somit treten die fehlerfreie Behälter transportierenden Transportelemente nach dem Zusammenfahren der Lücke mit der vorgegebenen Teilung d in eine stromabwärts liegende Behälterbehandlungseinheit ein. Dabei wird das entladene Transportelement 210-3 von der auf die Produktstromteilung d kalibrierten Behälterbehandlungseinheit übersprungen und behindert somit nicht den Durchsatz der Behälterbehandlungseinheit.

Z. B. kann die vorgegebene Teilung d eines Produktstroms an zu behandelnden Flaschen 100 mm betragen. Nach dem Zusammenfahren der durch Entladen des Transportelements 210-3 entstandenen Lücke durch Anpassen der Verfahrprofile der involvierten Transportelemente beträgt hingegen der Abstand zwischen benachbarten Transportelementen 210-2 und 210-3 bzw. 210-3 und 210-4 lediglich 50 mm. Das entladene Transportelement 210-3 kann somit bis zur nächstmöglichen Ausschleusung im Produktstrom mitgeführt werden, ohne den Ablauf der Behandlungsschritte zu stören.

Alternativ zum Entladen des fehlerhaften Behälters 225 kann der fehlerhafte Behälter auch beim entsprechenden Transportelement 210-3 verbleiben, welches dann mittels der Steuer- und/oder Regeleinheit als ein einen fehlerhaften Behälter transportierendes Transportelement identifiziert wird. Dabei kann eine derartige Identifizierung auch durch Markierung des entsprechenden Transportelements mittels einer an dem Transportelement angeordneter Identifikationseinheit elektronischer oder mechanischer Art erfolgen. Durch Markieren des entsprechenden Transportelements kann eine stromabwärts angeordnete Identifikationserfassungseinheit das Transportelement zu einem späteren Zeitpunkt identifizieren und ggf. aus dem Produktstrom ausschleusen.

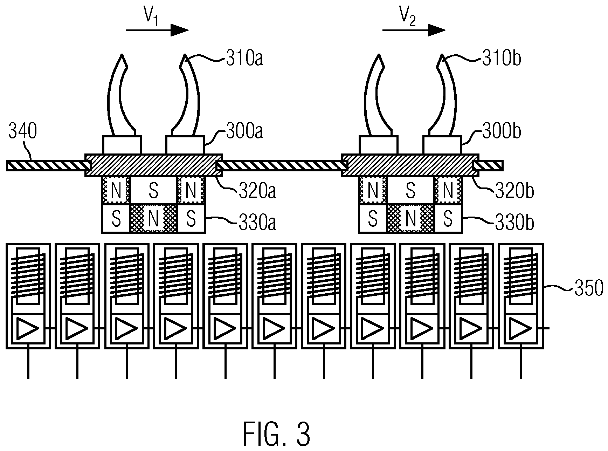

In Figur 3 sind exemplarisch zwei benachbarte Transportelemente 300a und 300b dargestellt. Die vorliegende Erfindung beschränkt sich jedoch nicht auf die hier dargestellte spezielle Ausführung der Transportelemente, sondern ist auf jede Art von Transportelementen anwendbar, solange diese einzeln steuerbar entlang einer Transportbahn geleitet werden können. Die hier dargestellten Transportelemente 300a und 300b können entlang der Transportbahn mittels einer Führungsschiene 340 geleitet werden. Dabei sind die Transportelemente in dieser speziellen Ausführung durch Gleitlager 320a und 320b an der Führungsschiene 340 gelagert. Die Figur zeigt weiterhin zwei Greifelemente 310a und 310b, mittels derer die Transportelemente die Behälter aufnehmen können.

Der Antrieb der hier dargestellten passiven Transportelemente geschieht durch magnetische Wechselwirkung zwischen den Reaktionselementen 330a bzw. 330b der Transportelemente und einer Vielzahl elektrischer Wicklungen 350 entlang der Transportbahn. Dabei können die elektrischen Wicklungen 350 individuell angesteuert und als Elektromagnete einzeln umgepolt werden. Durch Wechselwirkung der Magnetfelder der Elektromagnete mit den hier dargestellten Permanentmagneten der Transportelemente erfahren die Transportelemente eine Kraftwirkung, welche bei geeigneter Steuerung der Elektromagnete 350 zu einer Beschleunigung, Abbremsung oder konstanten Bewegung der Transportelemente entlang der Führungsschiene 340 führt. Die hier dargestellten Reaktionselemente 330a und 330b der Transportelemente bestehen aus drei alternierend und senkrecht zur Führungsschiene angeordneten Permanentmagneten, wobei die Breite des mittleren Permanentmagneten in etwa dem Abstand zweier benachbarten elektrischer Wicklungen der Transportbahn entspricht und die Breite der äußeren Permanentmagneten etwa jeweils der Hälfte des Abstands der benachbarten elektrischen Wicklungen entspricht. Bei alternierender Polung benachbarter Elektromagnete in der Transportbahn kann somit eine maximale Kraft auf das Reaktionselement entlang der Führungsschiene ausgeübt werden. Durch individuelles Ansteuern der Elektromagnete 350 können die Transportelemente 300a und 300b mit unterschiedlichen Geschwindigkeiten V₁ und V₂ entlang der Führungsschiene 340 bewegt werden. Bei den dargestellten senkrecht zur Führungsschiene angeordneten Magneten kann es sich jedoch auch um Elektromagnete handeln. Somit lassen sich durch individuelles Ansteuern der Elektromagnete 350 individuelle Weg-Zeit-Profile, also Verfahrprofile, der Transportelemente 300a und 300b realisieren.

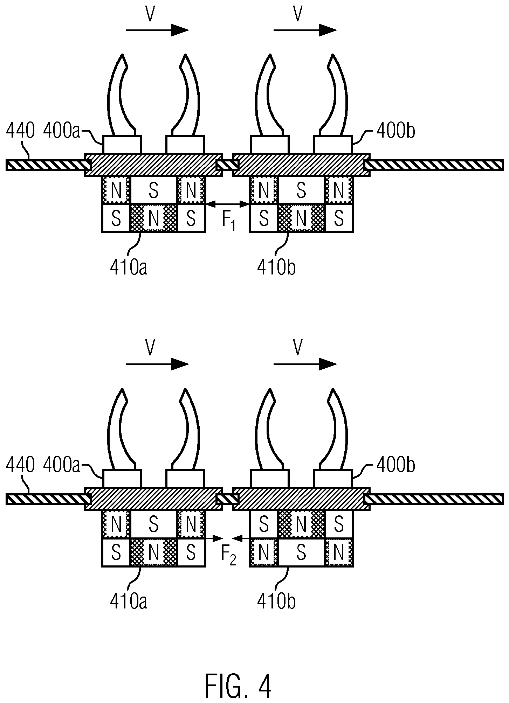

Bei der in Figur 3 dargestellten Anordnung der Magnete der Reaktionselemente stoßen sich die Reaktionselemente unmittelbar benachbarter Transportelemente gegenseitig ab. Eine solche abstoßende Kraft F₁ ist im oberen Teil der Figur 4 beispielhaft für die beiden benachbarten Transportelemente 400a und 400b zwischen deren Reaktionselementen 410a und 410b dargestellt. Durch Annähern der entlang der Führungsschiene 440 geführten Transportelemente 400a und 400b nimmt diese abstoßende Kraft kontinuierlich zu, sodass durch die Abstoßungswechselwirkung eine Kollision der beiden Transportelemente vermieden werden kann. Durch Umorientieren oder Umpolen eines oder mehrerer an einem der beiden Transportelemente angeordneter Magnete kann eine magnetische Kopplung der beiden Transportelemente erfolgen. In dem im unteren Teil der Figur 4 dargestellten Fall werden sämtliche Magnete des Reaktionselements 410b des vorausgehenden Transportelements 400b umgepolt bzw. umorientiert, sodass sich anstelle der abstoßenden Kraft F₁ eine anziehende Kraft F₂ zwischen den Reaktionselementen 410a und 410b der beiden benachbarten Transportelemente ergibt. In dem hier dargestellten Fall werden also die Magnete der Reaktionselemente, welche primär der Wechselwirkung mit der Transportbahn zum Bewegen der Transportelemente entlang der Transportbahn dienen, sekundär durch Umorientieren bzw. Umpolen für eine magnetische Kopplung zweier oder mehrerer Transportelemente verwendet. In diesem Falle wird das Ansteuern der elektrischen Wicklungen der Transportbahn im Bereich des Transportelements mit den umgepolten bzw. umorientierten Magneten in der Steuer- und Regeleinheit entsprechend angepasst. Dabei kann es ausreichend sein, nur einen Teil der Magnete des Reaktionselements umzupolen bzw. umzuorientieren, solange die Anziehungskraft F₂ die verbleibende Abstoßungskraft F₁ überkompensiert. Durch die resultierende Anziehung nähern sich die beiden Transportelemente 400a und 400b so lange an, bis sie sich berühren oder durch zusätzliche mechanische Kopplungselemente aneinander gekoppelt werden können.

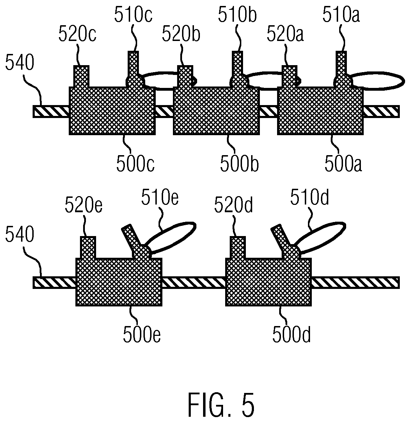

Figur 5 stellt eine alternative oder ergänzende Kopplung benachbarter Transportelemente mittels mechanischer Kopplungselemente skizzenhaft dar. Die hier beispielhaft dargestellten, sich entlang der Führungsschiene 540 bewegenden Transportelemente 500d und 500e verfügen jeweils über ein steuerbares, d. h. aktives Kopplungselement 510d bzw. 510e in Form einer Schlaufe sowie über ein passives Kopplungselement 520d bzw. 520e in Form eines feststehenden Stiftes, welcher die Schlaufe des nachfolgenden Transportelementes auffängt.

In dem dargestellten nicht limitierenden Beispiel können benachbarte Transportelemente 500a bis 500c durch Schalten, z. B. durch Absenken, der Schlaufe 510b bzw. 510c des jeweils nachfolgenden Transportelements an einen feststehenden Stift 520a bzw. 520b des jeweils vorauslaufenden Transportelements gekoppelt werden. Dadurch wird im dargestellten Fall ein Zug aus drei Transportelementen gebildet, welcher durch individuelles Ansteuern der Wechselwirkungselemente der Transportbahn im Bereich des gebildeten Zuges als Einheit bewegt wird. Die eingerastete Schlaufe 510b bzw. 510c kompensiert dabei eine etwaige Abstoßungskraft zwischen den Reaktionselementen der benachbarten Transportelemente, sodass die den Zug bildenden Gruppe der Transportelemente ohne zusätzliche Energie mit dem durch die Schlaufenweite vorgegebenen Abstand gemeinsam bewegt werden kann.

Durch Kippen der Schlaufe 510b bzw. 510c bzw. des Stiftes 520a bzw. 520b, im Falle eines schaltbaren Stiftes, kann ein Transportelement beim Auslaufen aus einer Prozessstrecke aus dem mechanischen Verbund des Zuges gelöst werden. Die Steuerung der hier exemplarisch dargestellten aktiven Kopplungselemente 510a bis 510e kann durch eine zentrale Steuer- und/oder Regeleinheit der Transporteinrichtung und/oder durch an den jeweiligen Transportelementen angebrachte dezentrale Steuer- und/oder Regeleinheiten erfolgen.

Die in Figur 5 gezeigte mechanische Kopplung lässt sich zudem mit der in Figur 4 gezeigten magnetischen Kopplung kombinieren, um ein Annähern der benachbarten Transportelemente ohne zusätzlichen Energieaufwand zu ermöglichen. Nach Einrasten der mechanischen Kopplung können die zuvor umgepolten bzw. umorientierten Magnete des einen Transportelements wieder in ihre ursprüngliche Polung bzw. Orientierung zurückgeführt werden, um das Ansteuern der Wechselwirkungselemente der Transportbahn zum gemeinsamen Führen des Zuges zu vereinfachen.

Anders als in Figur 4 dargestellt kann eine magnetische Kopplung benachbarter Transportelemente auch mittels getrennt von den zur Wechselwirkung mit der Transportbahn dienenden Magneten des Reaktionselements, an den Transportelementen bzw. deren Reaktionselementen angeordneten Kopplungselementen in Form zusätzlicher Magnete erfolgen. Dabei können die separaten, der Kopplung dienenden Magnete Permanentmagnete oder Elektromagnete sein.

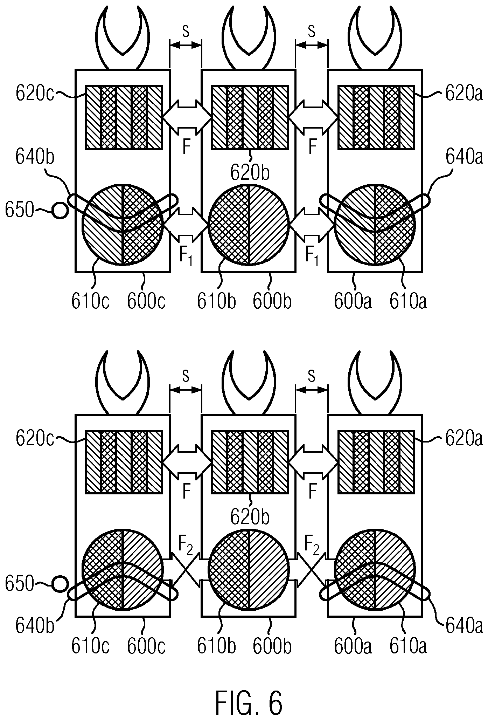

In der in Figur 6 dargestellten, nicht limitierenden speziellen Ausführung verfügt jedes der Transportelemente 600a bis 600c zusätzlich zu den der Wechselwirkung mit der Transportbahn dienenden Magneten 620a bis 620c des Reaktionselements über separate der magnetischen Kopplung dienende Magnete 610a bis 610c. Dabei sind im dargestellten Fall die der Kopplung dienenden Permanentmagnete jedes zweiten Transportelements 600a bzw. 600c drehbar bezüglich einer Achse senkrecht zur Führungsschiene, d. h. zur Bewegungsrichtung des Transportelements, an dem jeweiligen Transportelement bzw. dessen Reaktionselement gelagert. Im Gegenzug sind die der magnetischen Kopplung dienenden Permanentmagnete 610b der anderen Transportelemente fest an dem jeweiligen Transportelement 600b bzw. dessen Reaktionselement angeordnet. Alternativ kann aber auch jedes Transportelement über einen drehbaren der magnetischen Kopplung dienenden Magneten verfügen. Im Falle nicht gekoppelter, also individuell steuerbarer Transportelemente können die der magnetischen Kopplung dienenden Permanentmagnete oder Elektromagnete derart alternierend angeordnet sein, dass die zueinander weisenden Pole benachbarter Transportelemente jeweils gleiche Polung haben. Dadurch liegt im Falle nicht gekoppelter Transportelemente zusätzlich zu einer eventuell vorhandenen Abstoßungswechselwirkung F zwischen den der Wechselwirkung mit der Transportbahn dienenden Magnete 620a bis 620c der Reaktionselemente eine zusätzliche Abstoßungswechselwirkung F₁ der der magnetischen Kopplung dienenden Magnete zwischen benachbarten Transportelementen vor (siehe obere Teilfigur).

Mittels an den drehbar gelagerten Magneten angebrachter Bügel 640a und 640b kann durch Vorbeiführen des jeweiligen Transportelements 600a bzw. 600c an einem an der Transportbahn angeordneten schaltbaren Nocken 650 eine Umorientierung um 180° erfolgen, sodass anstelle der Abstoßungswechselwirkung F₁ nunmehr eine Anziehungswechselwirkung F₂ zwischen den der magnetischen Kopplung dienenden Magneten benachbarter Transportelemente vorherrscht (siehe untere Teilfigur). Dabei kann die Stärke der der magnetischen Kopplung dienenden Magnete derart gewählt werden, dass die Anziehungswechselwirkung F₂ die eventuell vorhandene Abstoßungswechselwirkung F zwischen den der Wechselwirkung mit der Transportbahn dienenden Magneten der jeweiligen Reaktionselemente überwiegt, sodass sich benachbarte Transportelemente 600a und 600b bzw. 600b und 600c aufgrund der magnetischen Anziehung automatisch weiter annähern, bis sie sich berühren oder durch ein mechanisches Kopplungselement aneinander gekoppelt werden. Im dargestellten Beispiel entsteht durch Umorientieren der Permanentmagnete 610a und 610c ein Zug aus drei benachbarten Transportelementen 600a bis 600c.

Wie bereits zuvor beschrieben kann der schaltbare Nocken auch alternativ an den jeweiligen Transportelementen angeordnet sein und beim Vorbeiführen an einem an der Transportbahn angeordneten entsprechenden Bügel in diesen greifen. Alternativ zur mechanischen Umorientierung von Permanentmagneten kann eine magnetische Kopplung benachbarter Transportelemente auch durch Umpolen eines der der magnetischen Kopplung dienenden Magnete erfolgen. Wie bereits mehrfach beschrieben kann dabei eine zentrale Steuer- und/oder Regeleinheit oder dezentrale, an den Transportelementen angeordnete Steuer- und/oder Regeleinheiten das Schalten des Nockens bzw. Umpolen der Magnete steuern.

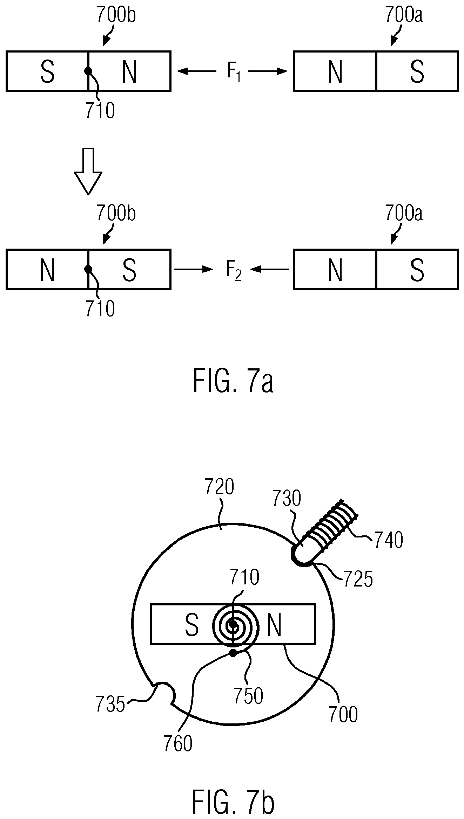

Alternativ zu dem in Bezug auf Figur 6 beschriebenen aktiven Umorientieren der der magnetischen Kopplung dienenden Permanentmagnete mittels eines schaltbaren Nockens kann das Umorientieren drehbar gelagerter Permanentmagnete jedoch auch automatisch allein aufgrund der Annäherung zweier benachbarter Transportelemente geschehen. In Teil a) der Figur 7 sind hierzu skizzenhaft ein feststehender Permanentmagnet 700a eines Transportelements und ein drehbar um die Drehachse 710 gelagerter Permanentmagnet 700b eines benachbarten Transportelements dargestellt. Bei nicht gekoppelten Transportelementen erfahren beide Magnete wie oben beschrieben eine abstoßende Wechselwirkung F₁. Da Permanentmagnet 700b jedoch drehbar um die Achse 710 gelagert ist, wird die abstoßende Kraft F₁ eine kleine Auslenkung aus der ursprünglichen Lage (hier entlang einer horizontalen Linie) verstärken und so den Permanentmagneten 700b so lange drehen, bis die Gesamtkonfiguration aus Permanentmagnet 700a und Permanentmagnet 700b ein energetisches Minimum erreicht. Dieses energetische Minimum liegt jedoch gerade bei maximaler Anziehungswechselwirkung F₂ zwischen den beiden Magneten vor, welche durch vollständiges Umorientieren des drehbaren Magneten 700b erreicht wird. Somit kann also die Abstoßungswechselwirkung im nicht gekoppelten Zustand zum automatischen Umorientieren des drehbar gelagerten Magneten und zur automatischen Kopplung der beiden benachbarten Transportelemente verwendet werden.

Um zu vermeiden, dass ein automatisches Umorientieren der drehbar gelagerten Magnete bereits bei großem Abstand, insbesondere bei der vorgegebenen Teilung eines Produktstroms, d. h. wenn eine Kopplung nicht erwünscht ist, automatisch erfolgt, kann der drehbar gelagerte Magnet 700 durch eine federgespannte Arretierungsvorrichtung 730 in seiner ursprünglichen, nicht gekoppelten Orientierung gehalten werden. In der in Teilfigur b) von Figur 7 dargestellten exemplarischen Ausführung ist dazu der Permanentmagnet 700 auf einer an der Achse 710 drehbar gelagerten Scheibe 720 angeordnet, welche an einer Stelle eine Aussparung 725 aufweist, in welche ein Bolzen 730 einer Arretierungsvorrichtung bei der ursprünglichen, ungekoppelten Transportelementen entsprechenden Stellung des Permanentmagneten 700 greift. Dabei kann die Aussparung 725 derart geformt sein, dass der Arretierungsbolzen 730 durch eine Feder 740 derart vorgespannt sein, dass der Arretierungsbolzen erst bei Überschreiten eines vorgegebenen Drehmoments auf die Drehscheibe 720, entsprechend einer vorgegebenen Absto-βungskraft F₁, auslöst und somit ein Umorientieren des Magneten 700 ermöglicht. Dabei entspricht das Überschreiten des Schwellwertes für die Abstoßungswechselwirkung F₁ dem Unterschreiten eines entsprechenden vorgegebenen Abstandes der benachbarten Transportelemente.

Zusätzlich zu dem Arretierungsbolzen kann die Drehscheibe 720 eine Rückstellvorrichtung, z. b. in Form einer Spiralfeder 750, aufweisen, welche an einem Punkt 760 der Drehscheibe und an der Drehachse 710 befestigt ist. Durch Umorientieren des Magneten 700 wird diese Spiralfeder 750 gespannt, sodass ein rückstellendes Drehmoment auf die Drehscheibe 720 ausgeübt wird. Bei Reduzierung der Anziehungskraft F₂, z. B. durch Vergrößern des Abstandes zwischen den benachbarten Transportelementen, dreht die durch das Umorientieren gespannte Spiralfeder den Permanentmagnet 700 wieder in die ursprüngliche Ausrichtung zurück. Damit dieses Zurückdrehen in die ursprüngliche Ausrichtung nicht allmählich, sondern in einem Schritt geschieht, kann die Drehscheibe 720 eine weitere Aussparung 735 aufweisen, in welche der Arretierungsbolzen 730 bei maximaler Anziehungskraft F₂, somit bei vollständiger Umorientierung des Magneten 700 greift. Die weitere Aussparung 735 kann dabei derart ausgebildet sein, dass der Arretierungsbolzen 730 bei Unterschreiten eines Schwellwertes der Anziehungskraft F₂ aufgrund der Spannung der Spiralfeder 750 automatisch auslöst.

Die vorliegende Erfindung ist jedoch nicht auf die Verwendung der hier beschriebenen Elemente wie der Drehscheibe, des Arretierungsbolzens und der Aussparungen beschränkt, sondern kann mittels alternativer, im Stand der Technik bekannter Arretierungsvorrichtungen und Rückstellvorrichtungen realisiert werden.

## Patentansprüche

1. Verfahren zum Anpassen von Verfahrprofilen einer Vielzahl von einzeln steuerbaren Transportelementen (810-1 - 810-18) zum Transport von Behältern (820a, 820b) in einer Behälterbehandlungsanlage entlang einer Transportbahn, wobei die Vielzahl der Transportelemente bewegbar an der Transportbahn angeordnet sind,
**gekennzeichnet durch** die Schritte:
Bestimmen eines Betriebszustandes mindestens einer ersten bezüglich einer Position eines Transportelements aus der Vielzahl der Transportelemente entlang der Transportbahn stromabwärts angeordneten Behälterbehandlungseinheit (850-1),
wobei das Transportelement mittels einer Steuer- und/oder Regeleinheit der Behälterbehandlungsanlage als Teil eines Stroms an Transportelementen bewegt wird,
wobei das Verfahrprofil des Transportelements mittels der Steuer- und/oder Regeleinheit in Abhängigkeit von dem bestimmten Betriebszustand angepasst wird,
wobei das Bestimmen des Betriebszustandes der ersten Behälterbehandlungseinheit (850-1) ein Vergleichen des bestimmten Betriebszustandes mit einem vorgegebenen Sollbetriebszustand umfasst, und
wobei das Verfahrprofil des Transportelements bei Abweichen des bestimmten Betriebszustandes von dem vorgegebenen Sollbetriebszustand derart angepasst wird, dass das Transportelement die erste Behälterbehandlungseinheit (850-1) entlang einer Bypassstrecke (840, 870) der Transportbahn umfährt.

2. Verfahren nach Anspruch 1, wobei das Verfahrprofil des Transportelements weiterhin derart angepasst wird, dass das Transportelement nach Umfahren der ersten Behälterbehandlungseinheit (850-1) einer entlang der Transportbahn stromabwärts von der ersten Behälterbehandlungseinheit angeordneten zweiten Behälterbehandlungseinheit (850-2) zugeführt wird.

3. Verfahren nach Anspruch 1 oder 2, wobei das Verfahrprofil des Transportelements weiterhin derart angepasst wird, dass das Transportelement zumindest zeitweise entlang der Bypassstrecke (870) gepuffert wird.

4. Verfahren nach einem der Ansprüche 1 bis 3, weiterhin umfassend:
erneutes Bestimmen eines Betriebszustandes der ersten Behälterbehandlungseinheit (850-1) und Vergleichen des erneut bestimmten Betriebszustandes mit dem vorgegebenen Sollbetriebszustand, und
Rückführen des Transportelements zu einem Zulauf der ersten Behälterbehandlungseinheit, falls der erneut bestimmte Betriebszustand dem vorgegebenen Sollbetriebszustand entspricht.

5. Transporteinrichtung zum Transport von Behältem (820a, 820b) in einer Behälterbehandlungsanlage, die mindestens eine erste Behälterbehandlungseinheit für einen ersten Prozessschritt aufweist, mit
einer Transportbahn,
mindestens einem Transportelement (810-1 - 810-18) mit einer Haltevorrichtung zum Transportieren eines oder mehrerer Behälter (820a, 820b), das an der Transportbahn bewegbar angeordnet ist, und
einer Steuer- und/oder Regeleinheit, welche dazu ausgebildet ist, das Transportelement gemäß einem vorgegebenen Verfahrprofil entlang zumindest eines Teils der Transportbahn als Teil eines Stroms an Transportelementen zu bewegen,
wobei die Transportbahn umfasst:
eine Prozessstrecke (800), an welcher mindestens die erste Behälterbehandlungseinheit (850-1) angeordnet ist, und
eine Bypassstrecke (840, 870), welche derart ausgebildet und mit der Prozessstrecke derart verbunden ist, dass die Bypassstrecke eine Umgehung zumindest der ersten Behälterbehandlungseinheit bildet; und
wobei die Transportbahn und das Transportelement derart ausgebildet sind, dass das Transportelement einzeln steuerbar entlang zumindest der Prozessstrecke (800) und der Bypassstrecke (840, 870) geführt werden kann,
**dadurch gekennzeichnet, dass** die Verfahrprofile in Abhängigkeit von einem Betriebszustand der zumindest ersten Behälterbehandlungseinheit (850-1) von der Steuer- und/oder Regeleinheit angepasst werden.

6. Transporteinrichtung nach Anspruch 5, weiterhin eine Pufferstrecke (870, 880) umfassend, welche derart mit der Prozessstrecke (800) und/oder der Bypassstrecke (840) verbunden ist, dass das Transportelement zumindest zeitweise durch Anhalten an der Pufferstrecke gespeichert werden kann.

7. Transporteinrichtung nach Anspruch 5 oder 6, wobei die Bypassstrecke (840) und/oder die Pufferstrecke (870, 880) derart mit einem magnetischen Linearantrieb ausgebildet sind, dass das Transportelement in beide Richtungen geführt werden kann.

8. Transporteinrichtung nach einem der Ansprüche 5 bis 7, weiterhin eine Prüfeinheit (860-1) umfassend, welche dazu ausgebildet ist, einen Behandlungszustand eines von dem Transportelement mitgeführten Behälters (820a) zu bestimmen.

9. Transporteinrichtung nach Anspruch 8,
wobei die Prüfeinheit (860-1) dazu ausgebildet ist, den bestimmten Behandlungszustand mittels eines Signals an die Steuer- und/oder Regeleinheit zu übermitteln, und
wobei die Steuer- und/oder Regeleinheit dazu ausgebildet ist, das vorgegebene Verfahrprofil des Transportelements in Abhängigkeit von dem bestimmten Behandlungszustand anzupassen.

## Claims

1. A method for adapting motion profiles of a plurality of individually controllable transport elements (810-1 - 810-18) for transporting containers (820a, 820b) in a container treatment system along a transport path, wherein the plurality of transport elements are movably arranged along the transport path,
**characterized by** the following steps:
determining an operating state of at least a first container treatment unit (850-1) arranged downstream along the transport path with respect to a position of a transport element from the plurality of transport elements,
wherein the transport element is moved by means of an open- and/or closed-loop control unit of the container treatment system as part of a stream of transport elements, wherein the motion profile of the transport element is adapted by means of the open- and/or closed-loop control unit as a function of the determined operating state,
wherein the determination of the operating state of the first container treatment unit (850-1) comprises a comparison of the determined operating state with a predetermined desired operating state, and
wherein the motion profile of the transport element in case of a deviation of the determined operating state from the predetermined desired operating state is adapted so that the transport element bypasses the first container treatment unit (850-1) along a bypass section (840, 870) of the transport path.

2. The method according to claim 1, wherein the motion profile of the transport element is further adapted so that the transport element, after bypassing the first container treatment unit (850-1), is conveyed to a second container treatment unit (850-2) arranged downstream of the first container treatment unit along the transport path.

3. The method according to claims 1 or 2, wherein the motion profile of the transport element is further adapted so that the transport element is at least temporarily buffered along the bypass section (870).

4. The method according to any one of claims 1 to 3, further comprising:
re-determining an operating state of the first container treatment unit (850-1) and comparing the re-determined operating state with the predetermined desired operating state, and
returning the transport element to an infeed of the first container treatment unit if the re-determined operating state corresponds to the predetermined desired operating state.

5. A transport apparatus for transporting containers (820a, 820b) in a container treatment system including at least one first container treatment unit for a first process step, comprising:
a transport path,
at least one transport element (810-1 - 810-18) having a holding device for transporting one or more containers (820a, 820b) movably arranged along the transport path, and
an open- and/or closed-loop control unit configured to move the transport element along at least part of the transport path as part of a stream of transport elements in accordance with a predetermined motion profile,
wherein the transport path comprises:
a process section (800) along which at least the first container treatment unit (850-1) is arranged, and
a bypass section (840, 870) configured and connected to the process section so that the bypass section forms a bypass of at least the first container treatment unit; and
wherein the transport path and the transport element are configured so that the transport element can be guided individually controllable along at least the process section (800) and the bypass section (840, 870),
**characterized in that** the motion profiles are adapted by the open- and/or closed-loop control unit as a function of an operating state of the at least first container treatment unit (850-1).

6. The transport apparatus according to claim 5, further comprising a buffer section (870, 880) connected to the process section (800) and/or the bypass section (840) so that the transport element can be buffered at least temporarily by stopping at the buffer section.

7. The transport apparatus according to claims 5 or 6, wherein the bypass section (840) and/or the buffer section (870, 880) are configured with a magnetic linear drive so that the transport element can be guided in both directions.

8. The transport apparatus according to any one of claims 5 to 7, further comprising a test unit (860-1) configured to determine a treatment state of a container (820a) carried along by the transport element.

9. The transport apparatus according to claim 8,
wherein the test unit (860-1) is configured to transmit the determined treatment state to the open- and/or closed-loop control unit by means of a signal, and
wherein the open- and/or closed-loop control unit is configured to adapt the predetermined motion profile of the transport element as a function of the determined treatment state.

## Revendications

1. Procédé permettant d'adapter des profils de déplacement d'une pluralité d'éléments de transport (810-1 à 810-18) pouvant être commandés individuellement et destinés au transport de récipients (820a, 820b) le long d'une voie de transport au sein d'une installation de traitement de récipients, dans lequel la pluralité d'éléments de transport est agencée de manière mobile sur la voie de transport,
**caractérisé par** les étapes consistant à :
déterminer un état de fonctionnement d'au moins une première unité de traitement de récipients (850-1) agencée en aval par rapport à une position d'un élément de transport issu de la pluralité d'éléments de transport le long de la voie de transport,
dans lequel l'élément de transport est déplacé en tant que partie d'un flux d'éléments de transport au moyen d'une unité de commande et/ou de régulation de l'installation de traitement de récipients,
dans lequel le profil de déplacement de l'élément de transport est adapté au moyen de l'unité de commande et/ou de régulation en fonction de l'état de fonctionnement déterminé,
dans lequel la détermination de l'état de fonctionnement de la première unité de traitement de récipients (850-1) comprend une comparaison de l'état de fonctionnement déterminé avec un état de fonctionnement théorique prédéfini, et
dans lequel le profil de déplacement de l'élément de transport est adapté en cas d'écart entre l'état de fonctionnement déterminé et l'état de fonctionnement théorique prédéfini de telle manière que l'élément de transport contourne la première unité de traitement de récipients (850-1) le long d'une voie de dérivation (840, 870) de la voie de transport.

2. Procédé selon la revendication 1, dans lequel le profil de déplacement de l'élément de transport est en outre adapté de telle manière qu'après avoir contourné la première unité de traitement de récipients (850-1), l'élément de transport est acheminé vers une seconde unité de traitement de récipients (850-2) agencée le long de la voie de transport en aval de la première unité de traitement de récipients.

3. Procédé selon la revendication 1 ou 2, dans lequel le profil de déplacement de l'élément de transport est en outre adapté de telle manière que l'élément de transport est mis en attente au moins temporairement le long de la voie de dérivation (870).

4. Procédé selon l'une quelconque des revendications 1 à 3, comprenant en outre les étapes consistant à :
déterminer à nouveau un état de fonctionnement de la première unité de traitement de réservoir (850-1) et comparer l'état de fonctionnement déterminé à nouveau avec l'état de fonctionnement théorique prédéfini, et
renvoyer l'élément de transport vers une arrivée de la première unité de traitement des récipients si l'état de fonctionnement déterminé à nouveau correspond à l'état de fonctionnement théorique prédéfini.

5. Dispositif de transport permettant de transporter des récipients (820a, 820b) au sein d'une installation de traitement de récipients présentant au moins une première unité de traitement de récipients destinée à une première étape de procédé, comprenant
une voie de transport,
au moins un élément de transport (810-1 à 810-18) comprenant un dispositif de retenue permettant de transporter un ou plusieurs récipient(s) (820a, 820b) et agencé de manière mobile sur la voie de transport, et
une unité de commande et/ou de régulation conçue pour déplacer l'élément de transport selon un profil de déplacement prédéfini le long d'au moins une partie de la voie de transport en tant que partie d'un flux d'éléments de transport,
dans lequel la voie de transport comprend :
une voie de procédé (800) sur laquelle est agencée au moins la première unité de traitement de récipients (850-1), et
une voie de dérivation (840, 870) conçue et reliée à la voie de procédé de telle manière que la voie de dérivation constitue un contournement d'au moins la première unité de traitement de récipients ; et
dans lequel la voie de transport et l'élément de transport sont conçus de telle manière que l'élément de transport peut être guidé le long d'au moins la voie de procédé (800) et la section de dérivation (840, 870) en étant commandé de manière individuelle,
**caractérisé en ce que** les profils de déplacement sont adaptés par l'unité de commande et/ou de régulation en fonction d'un état de fonctionnement de la au moins une première unité de traitement de récipients (850-1).

6. Dispositif de transport selon la revendication 5, comprenant en outre une voie de mise en attente (870, 880) reliée à la voie de procédé (800) et/ou à la voie de dérivation (840) de telle manière que l'élément de transport peut être stocké au moins temporairement en s'arrêtant sur la voie de mise en attente.

7. Dispositif de transport selon la revendication 5 ou 6, dans lequel la voie de dérivation (840) et/ou la voie de mise en attente (870, 880) sont conçues avec un entraînement linéaire magnétique de telle manière que l'élément de transport peut être guidé dans les deux sens.

8. Dispositif de transport selon l'une quelconque des revendications 5 à 7, comprenant en outre une unité de test (860-1) conçue pour déterminer un état de traitement d'un récipient (820a) transporté par l'élément de transport.

9. Dispositif de de transport selon la revendication 8,
dans lequel l'unité de test (860-1) est conçue pour transmettre l'état de traitement déterminé à l'unité de commande et/ou de régulation au moyen d'un signal, et
dans lequel l'unité de commande et/ou de régulation est conçue pour adapter le profil de déplacement prédéfini de l'élément de transport en fonction de l'état de traitement déterminé.
